(19) Europäisches Patentamt
European Patent Office
Office européen des brevets

(11) **EP 4 661 464 A1**

(12) **EUROPEAN PATENT APPLICATION**
published in accordance with Art. 153(4) EPC

(43) Date of publication:
**10.12.2025 Bulletin 2025/50**

(21) Application number: **24755974.3**

(22) Date of filing: **30.01.2024**

(51) International Patent Classification (IPC):
**H04W 16/22** (2009.01)

(52) Cooperative Patent Classification (CPC):
**H04L 41/16; H04W 16/22**

(86) International application number:
**PCT/CN2024/074743**

(87) International publication number:
**WO 2024/169600 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023 CN 202310165353**

(71) Applicant: **Huawei Technologies Co., Ltd.
Shenzhen, Guangdong 518129 (CN)**

(72) Inventors:
• **TIAN, Yang
Shenzhen, Guangdong 518129 (CN)**

• **CHAI, Xiaomeng
Shenzhen, Guangdong 518129 (CN)**
• **ZHANG, Wenkai
Shenzhen, Guangdong 518129 (CN)**
• **SUN, Yan
Shenzhen, Guangdong 518129 (CN)**
• **PANG, Jiyong
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD AND APPARATUS**

(57) This disclosure provides a communication method and apparatus. The method includes: receiving a training data set and first information, where the first information includes identification information corresponding to one or more pieces of training data in the training data set, the identification information indicates that the corresponding training data belongs to first-type training data or second-type training data, and the second-type training data is obtained by processing the first-type training data based on an augmentation algorithm. In the method, different communication scenarios can be flexibly matched, and a model is processed based on the first-type training data and/or the second-type training data, thereby improving performance of the model.

FIG. 4

**Description**

CROSS-REFERENCE TO RELATED APPLICATIONS

This application claims priority to Chinese Patent Application No. 202310165353.6, filed with the China National Intellectual Property Administration on February 17, 2023 and entitled "COMMUNICATION METHOD AND APPARATUS", which is incorporated herein by reference in its entirety.

TECHNICAL FIELD

This disclosure relates to the field of communication technologies, and in particular, to a communication method and apparatus.

BACKGROUND

In wireless communication networks, for example, in mobile communication networks, services supported by the network are increasingly diverse, and thus a growing variety of demands need to be satisfied. For example, the network needs to support an ultra-high rate, an ultra-low latency, and/or massive connections. This feature makes network planning, network configuration, and/or resource scheduling increasingly complex. In addition, with network's functions become more powerful, for example, supporting higher spectrums, supporting higher-order multiple-input multiple-output (multiple-input multiple-output, MIMO), beamforming, and/or beam management, and other new technologies, network energy saving has become a hot research topic. These new requirements, scenarios, and features bring unprecedented challenges to network planning, operation and maintenance, and efficient operation. To address the challenges, artificial intelligence technologies can be introduced into the wireless communication networks to implement network intelligence. Based on this, how to effectively implement artificial intelligence in a network, for example, how to use artificial intelligence for information transmission, is a problem worth studying.

SUMMARY

This disclosure provides a communication method and apparatus, to improve application performance of artificial intelligence in a wireless communication network.

According to a first aspect, this disclosure provides a communication method. A second device receives a training data set and first information, and the second device processes a model based on the training data set and the first information. The first information includes identification information corresponding to one or more pieces of training data in the training data set, the identification information indicates that the corresponding training data belongs to first-type training data or second-type training data, and the second-type training data is obtained by processing the first-type training data based on an augmentation algorithm. For example, the second device may be a terminal device or a network device. Optionally, in this disclosure, the second device may also be referred to as a device for executing a processing task of an AI model, that is, a device configured to process the AI model. A first device may also be referred to as a training data augmentation device of the AI model, that is, a device configured to augment training data of the AI model. Optionally, the processing task performed for the AI model includes one or more of the following: initial model training, model retraining, model update, model performance monitoring, or model performance verification.

In the foregoing design, data augmentation can be performed on the first-type training data, for example, raw data, to obtain the second-type training data, for example, augmented data, and the first-type data and the second-type data are distinguished by using indication information. The second device may process the model by using the first-type data and/or the second-type data. This is relatively flexible, and helps improve performance of the model in a wireless communication network.

In a possible design, the training data set includes N1 groups of training data, and the first information includes N2 pieces of identification information, where N1 is greater than or equal to N2, and N1 and N2 are positive integers. In this design, multiple groups of training data can correspond to one piece of identification information, thereby helping reduce signaling overheads of the first information.

For example, in this design, an $i^{th}$ part of groups of training data in the N1 groups of training data corresponds to an $i^{th}$ piece of identification information, where i is a positive integer from 1 to N2, and the $i^{th}$ piece of identification information indicates that all training data in the $i^{th}$ part of groups of training data belongs to the first-type training data or the second-type training data; and the $i^{th}$ part of groups of training data includes an $i^{th}$ group of training data in the N1 groups of training data, or the $i^{th}$ part of groups of training data includes multiple consecutive groups of training data in the N1 groups of training data.

Optionally, content indicated by the $i^{th}$ piece of identification information is different from content indicated by the (i+1)th piece of identification information. To be specific, all training data in the ith part of groups of training data belongs to the first-type training data, and all training data in the (i+1)th part of groups of training data belongs to the second-type training data; or all training data in the ith part of groups of training data belongs to the second-type training data, and all training data in the (i+1)th part of groups of training data belongs to the first-type training data.

In a possible design, the second device may further send second information to the first device, where the second information is used to request training data. Then, the second device receives the training data set and the first information from the first device. For example, the first device may be a network device or a core network device. In this design, the second device may control a model processing time, and request training data required for model processing.

Optionally, the second information includes one or more of the following: a type of the training data, an amount of the training data, or data quality indicator information corresponding to the training data. In this design, the second device may request training data expected by the second device. This is relatively flexible and more suitable for an actual model processing scenario.

In a possible design, the second device may further receive third information. For example, the second device receives the third information from the first device, where the third information indicates specified training data in the training data set, and the specified training data includes all or part of data in the training data set. Then, the second device may process the model based on the specified training data. This design may be used in a scenario in which the first device and the second device perform model processing at both ends, and training data at both ends is unified, thereby helping improve model performance.

For example, the third information includes a group identifier corresponding to the specified training data, or the third information includes indication information of a processing task of the model, and there is a mapping relationship between the processing task and the specified training data. In this design, indication overheads of the specified training data can be reduced.

In a possible design, the second device may determine, based on a processing task of the model, whether to use the first-type training data and whether to use the second-type training data. For example, when a processing task of the model corresponds to a first value, the second device may process the model based on all or part of data in the first-type training data. For example, when a processing task of the model corresponds to a second value, the second device may process the model based on all or part of data in the first-type training data and all or part of data in the second-type training data. For another example, when a processing task of the model corresponds to a third value, the second device may process the model based on all or part of data in the second-type training data.

In a possible design, the first-type training data includes first input data and/or first output label data of the model, and the second-type training data includes second input data obtained by processing the first input data based on the augmentation algorithm and/or second output label data obtained by processing the first output label data based on the augmentation algorithm.

For example, a type of the first-type training data includes a type of the first input data and/or a type of the first output label data, where the type of the first input data is a channel impulse response, and the type of the first output label data is position information; or the type of the first input data is a power delay profile, and the type of the first output label data is angle of arrival information or time of arrival information; or the type of the first input data is channel state information, and the type of the first output label data is compressed information of the channel state information.

The foregoing design supports learning and processing of a model without a label or with a label, and may be adapted to model processing in multiple wireless communication scenarios.

According to a second aspect, this disclosure provides a communication method. A first device sends a training data set and first information, where the training data set and the first information are used to process a model. The first information includes identification information corresponding to one or more pieces of training data in the training data set, the identification information indicates that the corresponding training data belongs to first-type training data or second-type training data, and the second-type training data is obtained by processing the first-type training data based on an augmentation algorithm.

In a possible design, the training data set includes N1 groups of training data, and the first information includes N2 pieces of identification information, where N1 is greater than or equal to N2, and N1 and N2 are positive integers.

For example, an ith part of groups of training data in the N1 groups of training data corresponds to an ith piece of identification information, where i is a positive integer from 1 to N2, and the ith piece of identification information indicates that all training data in the ith part of groups of training data belongs to the first-type training data or the second-type training data; and the ith part of groups of training data includes an ith group of training data in the N1 groups of training data, or the ith part of groups of training data includes multiple consecutive groups of training data in the N1 groups of training data.

Optionally, content indicated by the ith piece of identification information is different from content indicated by the (i+1)th piece of identification information.

In a possible design, the first device may further receive second information, where the second information is used to request training data. For example, the first device receives the second information from a second device.

Optionally, the second information includes one or more of the following: a type of the training data, an amount of the training data, or data quality indicator information corresponding to the training data.

In a possible design, the first device may further send third information. For example, the first device sends the third information to the second device. The third information indicates specified training data in the training data set, and the specified training data includes all or part of data in the training data set, where the specified training data is used to process the model.

Optionally, the third information includes a group identifier corresponding to the specified training data, or the third information includes indication information of a processing task of the model, and there is a mapping relationship between the processing task and the specified training data.

In a possible design, the first-type training data includes first input data and/or first output label data of the model, and the second-type training data includes second input data obtained by processing the first input data based on the augmentation algorithm and/or second output label data obtained by processing the first output label data based on the augmentation algorithm.

For example, a type of the first-type training data includes a type of the first input data and/or a type of the first output label data, where the type of the first input data is a channel impulse response, and the type of the first output label data is position information; or the type of the first input data is a power delay profile, and the type of the first output label data is angle of arrival information or time of arrival information; or the type of the first input data is channel state information, and the type of the first output label data is compressed information of the channel state information.

According to a third aspect, this disclosure provides a communication apparatus. The communication apparatus may be a second device, or may be an apparatus, a module, a chip, or the like in the second device, or may be an apparatus that can be used in combination with the second device. Optionally, the second device may be a terminal device. In a design, the communication apparatus may include modules that are in one-to-one correspondence with the methods/operations/steps/actions described in the first aspect. The modules may be implemented by a hardware circuit, software, or a combination of a hardware circuit and software. In a design, the communication apparatus may include a processing module and a communication module.

The communication module is configured to receive a training data set and first information. The processing module is configured to process a model based on the training data set and the first information. The first information includes identification information corresponding to one or more pieces of training data in the training data set, the identification information indicates that the corresponding training data belongs to first-type training data or second-type training data, and the second-type training data is obtained by processing the first-type training data based on an augmentation algorithm.

In a possible design, the training data set includes N1 groups of training data, and the first information includes N2 pieces of identification information, where N1 is greater than or equal to N2, and N1 and N2 are positive integers.

For example, in this design, an $i^{th}$ part of groups of training data in the N1 groups of training data corresponds to an $i^{th}$ piece of identification information, where i is a positive integer from 1 to N2, and the $i^{th}$ piece of identification information indicates that all training data in the $i^{th}$ part of groups of training data belongs to the first-type training data or the second-type training data; and the $i^{th}$ part of groups of training data includes an $i^{th}$ group of training data in the N1 groups of training data, or the $i^{th}$ part of groups of training data includes multiple consecutive groups of training data in the N1 groups of training data.

Optionally, content indicated by the $i^{th}$ piece of identification information is different from content indicated by the $(i+1)^{th}$ piece of identification information. To be specific, all training data in the $i^{th}$ part of groups of training data belongs to the first-type training data, and all training data in the $(i+1)^{th}$ part of groups of training data belongs to the second-type training data; or all training data in the $i^{th}$ part of groups of training data belongs to the second-type training data, and all training data in the $(i+1)^{th}$ part of groups of training data belongs to the first-type training data.

In a possible design, the communication module is further configured to send second information to a first device, where the second information is used to request training data. Based on this, the training data set and the first information that are received by the communication module may be from the first device. Optionally, the second information includes one or more of the following: a type of the training data, an amount of the training data, or data quality indicator information corresponding to the training data.

In a possible design, the communication module is further configured to receive third information. For example, the third information is from the first device. The third information indicates specified training data in the training data set, and the specified training data includes all or part of data in the training data set. The processing module is further configured to process the model based on the specified training data.

For example, the third information includes a group identifier corresponding to the specified training data, or the third information includes indication information of a processing task of the model, and there is a mapping relationship between the processing task and the specified training data.

In a possible design, the processing module may determine, based on a processing task of the model, whether to use the first-type training data and whether to use the second-type training data. For example, when a processing task of the model corresponds to a first value, the processing module is specifically configured to process the model based on all or part of data in the first-type training data. For example, when a processing task of the model corresponds to a second value, the processing module is specifically configured to process the model based on all or part of data in the first-type training data and all or part of data in the second-type training data. For another example, when a processing task of the model corresponds to a third value, the processing module is specifically configured to process the model based on all or part of data in the second-type training data.

In a possible design, the first-type training data includes first input data and/or first output label data of the model, and the second-type training data includes second input data obtained by processing the first input data based on the augmentation algorithm and/or second output label data obtained by processing the first output label data based on the augmentation algorithm.

For example, a type of the first-type training data includes a type of the first input data and/or a type of the first output label data, where the type of the first input data is a channel impulse response, and the type of the first output label data is position information; or the type of the first input data is a power delay profile, and the type of the first output label data is angle of arrival information or time of arrival information; or the type of the first input data is channel state information, and the type of the first output label data is compressed information of the channel state information.

According to a fourth aspect, this disclosure provides a communication apparatus. The communication apparatus may be a first device, or may be an apparatus, a module, a chip, or the like in the first device, or may be an apparatus that can be used in combination with the first device. Optionally, the first device may be a network device or a core network device. In a design, the communication apparatus may include modules that are in one-to-one correspondence with the methods/operations/steps/actions described in the second aspect. The modules may be implemented by a hardware circuit, software, or a combination of a hardware circuit and software. In a design, the communication apparatus may include a processing module and a communication module.

The processing module is configured to determine a training data set and first information.

The communication module is configured to send the training data set and the first information, where the training data set and the first information are used to process a model. The first information includes identification information corresponding to one or more pieces of training data in the training data set, the identification information indicates that the corresponding training data belongs to first-type training data or second-type training data, and the second-type training data is obtained by processing the first-type training data based on an augmentation algorithm.

In a possible design, the training data set includes N1 groups of training data, and the first information includes N2 pieces of identification information, where N1 is greater than or equal to N2, and N1 and N2 are positive integers.

For example, an $i^{th}$ part of groups of training data in the N1 groups of training data corresponds to an $i^{th}$ piece of identification information, where i is a positive integer from 1 to N2, and the $i^{th}$ piece of identification information indicates that all training data in the $i^{th}$ part of groups of training data belongs to the first-type training data or the second-type training data; and the $i^{th}$ part of groups of training data includes an $i^{th}$ group of training data in the N1 groups of training data, or the $i^{th}$ part of groups of training data includes multiple consecutive groups of training data in the N1 groups of training data.

Optionally, content indicated by the $i^{th}$ piece of identification information is different from content indicated by the $(i+1)^{th}$ piece of identification information.

In a possible design, the communication module is further configured to receive second information. For example, the second information is from a second device. The second information is used to request training data.

Optionally, the second information includes one or more of the following: a type of the training data, an amount of the training data, or data quality indicator information corresponding to the training data.

In a possible design, the communication module is further configured to send third information. For example, the first device sends the third information to the second device. The third information indicates specified training data in the training data set, and the specified training data includes all or part of data in the training data set, where the specified training data is used to process the model.

Optionally, the third information includes a group identifier corresponding to the specified training data, or the third information includes indication information of a processing task of the model, and there is a mapping relationship between the processing task and the specified training data.

In a possible design, the first-type training data includes first input data and/or first output label data of the model, and the second-type training data includes second input data obtained by processing the first input data based on the augmentation algorithm and/or second output label data obtained by processing the first output label data based on the augmentation algorithm.

For example, a type of the first-type training data includes a type of the first input data and/or a type of the first output label data, where the type of the first input data is a channel impulse response, and the type of the first output label data is position information; or the type of the first input data is a power delay profile, and the type of the first output label data is angle of arrival information or time of arrival information; or the type of the first input data is channel state information, and the type of the first output label data is compressed information of the channel state information.

According to a fifth aspect, this disclosure provides a communication apparatus. The communication apparatus includes a processor, configured to implement the method described in the first aspect. The processor is coupled to a memory, the memory is configured to store instructions and data, and when the processor executes the instructions stored in the memory, the method described in the first aspect may be implemented. Optionally, the communication apparatus may further include the memory. The communication apparatus may further include a communication interface, and the communication interface is used by the apparatus to communicate with another device. For example, the communication interface may be a transceiver, a circuit, a bus, a module, a pin, or another type of communication interface.

The communication interface is configured to receive a training data set and first information.

The processor is configured to process a model based on the training data set and the first information. The first information includes identification information corresponding to one or more pieces of training data in the training data set, the identification information indicates that the corresponding training data belongs to first-type training data or second-type training data, and the second-type training data is obtained by processing the first-type training data based on an augmentation algorithm.

According to a sixth aspect, this disclosure provides a communication apparatus. The communication apparatus includes a processor, configured to implement the method described in the second aspect. The processor is coupled to a memory, the memory is configured to store instructions and data, and when the processor executes the instructions stored in the memory, the method described in the second aspect may be implemented. Optionally, the communication apparatus may further include the memory. The communication apparatus may further include a communication interface, and the communication interface is used by the apparatus to communicate with another device. For example, the communication interface may be a transceiver, a circuit, a bus, a module, a pin, or another type of communication interface.

The processor is configured to determine a training data set and first information.

The communication interface is configured to send the training data set and the first information, where the training data set and the first information are used to process a model. The first information includes identification information corresponding to one or more pieces of training data in the training data set, the identification information indicates that the corresponding training data belongs to first-type training data or second-type training data, and the second-type training data is obtained by processing the first-type training data based on an augmentation algorithm.

According to a seventh aspect, this disclosure provides a communication system, including the communication apparatus described in the third aspect or the fifth aspect and the communication apparatus described in the fourth aspect or the sixth aspect.

According to an eighth aspect, this disclosure further provides a computer program. When the computer program is run on a computer, the computer is caused to perform the method provided in the first aspect or the second aspect.

According to a ninth aspect, this disclosure further provides a computer program product, including instructions. When the instructions are run on a computer, the computer is caused to perform the method provided in the first aspect or the second aspect.

According to a tenth aspect, this disclosure further provides a computer-readable storage medium. The computer-readable storage medium stores a computer program or instructions, and when the computer program or the instructions are run on a computer, the computer is caused to perform the method provided in the first aspect or the second aspect.

According to an eleventh aspect, this disclosure further provides a chip. The chip is configured to read a computer program stored in a memory, to perform the method provided in the first aspect or the second aspect, or the chip includes a circuit configured to perform the method provided in the first aspect or the second aspect.

According to a twelfth aspect, this disclosure further provides a chip system. The chip system includes a processor, configured to support an apparatus in implementing the method provided in the first aspect or the second aspect. In a possible design, the chip system further includes a memory, and the memory is configured to store a program and data that are necessary for the apparatus. The chip system may include a chip, or may include a chip and another discrete component.

For effects of the solution provided in any one of the second aspect to the twelfth aspect, refer to corresponding descriptions in the first aspect.

BRIEF DESCRIPTION OF DRAWINGS

FIG. 1 is a diagram of a structure of a communication system;
FIG. 2A is a diagram of a neuron structure;
FIG. 2B is a diagram of a layer relationship of a neural network;
FIG. 2C is a diagram of one iteration process of a neural network;
FIG. 2D is a diagram of an AI application framework according to this disclosure;
FIG. 3 is a diagram of a structure of another communication system;
FIG. 4 is a schematic flowchart of a communication method according to this disclosure;

FIG. 5 is a diagram of an application framework of an autoencoder;

FIG. 6 is a schematic flowchart of a communication method according to this disclosure;

FIG. 7 is a schematic flowchart of a communication method according to this disclosure;

FIG. 8A to FIG. 8C are schematic flowcharts of a downlink positioning scenario;

FIG. 9 is a diagram of an application framework of model processing in a downlink positioning scenario;

FIG. 10 is a schematic flowchart of a communication method according to this disclosure;

FIG. 11A and FIG. 11B are diagrams of a principle of an augmentation algorithm corresponding to a CIR;

FIG. 11C is a diagram of a principle of an augmentation algorithm corresponding to position information;

FIG. 12 is a schematic flowchart of a communication method according to this disclosure;

FIG. 13A is a diagram of a principle of an augmentation algorithm corresponding to a PDP;

FIG. 13B is a diagram of a principle of an augmentation algorithm corresponding to an AOA or a TOA;

FIG. 14A to FIG. 14C are schematic flowcharts of an uplink positioning scenario;

FIG. 15 is a diagram of an application framework of model processing in an uplink positioning scenario;

FIG. 16 is a schematic flowchart of a communication method according to this disclosure;

FIG. 17 is a diagram of a structure of a communication apparatus according to this disclosure; and

FIG. 18 is a diagram of a structure of a communication apparatus according to this disclosure.

DESCRIPTION OF EMBODIMENTS

To make objectives, technical solutions, and advantages of this disclosure clearer, the following further describes this disclosure in detail with reference to accompanying drawings.

"At least one piece (item)" described in this disclosure below indicates one piece (item) or more pieces (items). "Multiple (items) "means two (items) or more (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although terms such as first and second may be used in this disclosure to describe objects, these objects are not limited by these terms. These terms are merely used to distinguish the objects from each other.

Terms "include" and "have" and any variant thereof mentioned in descriptions of this disclosure below are intended to cover non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that in this disclosure, terms such as "example" or "for example" indicates giving an example, an illustration, or a description. Any method or design solution described as "example" or "for example" in this disclosure should not be explained as being more preferred or having more advantages than another method or design solution. To be precise, the term "example", "for example", or the like is intended to present a related concept in a specific manner.

The technical solutions provided in this application may be used in various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system like a 6th generation (6th generation, 6G) mobile communication system, or a converged system of multiple systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), an internet of things (internet of things, IoT) communication system, or another communication system.

A network element in a communication system may send a signal to another network element or receive a signal from another network element. The signal may include information, signaling, data, or the like. The network element may alternatively be replaced with an entity, a network entity, a device, a communication device, a communication module, a node, a communication node, or the like. In this disclosure, the network element is used as an example for description. For example, the communication system may include at least one terminal device and at least one access network device. The access network device may send a downlink signal to the terminal device, and/or the terminal device may send an uplink signal to the access network device. In addition, it may be understood that if the communication system includes multiple terminal devices, the multiple terminal devices may send signals to each other. In other words, both a signal sending network element and a signal receiving network element may be terminal devices.

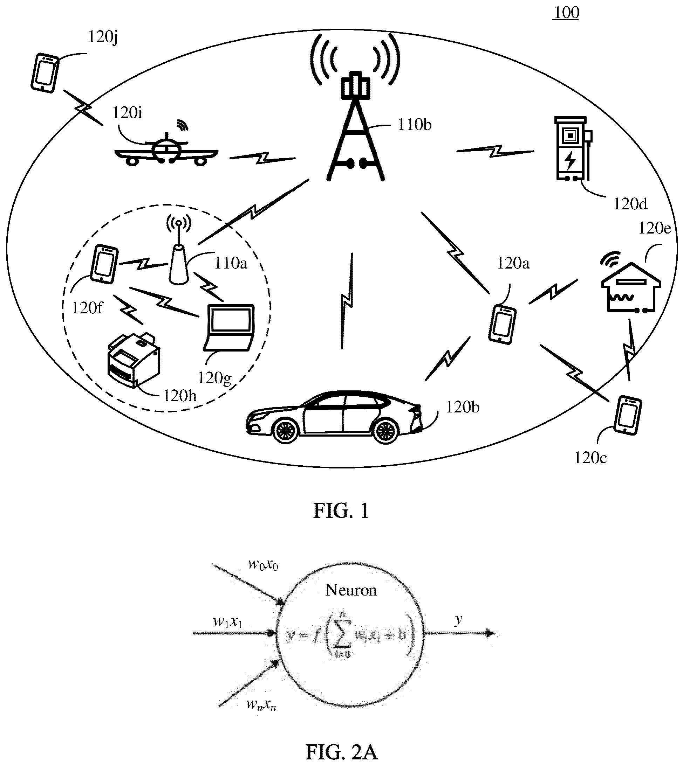

The communication method provided in this disclosure may be applied to a wireless communication system such as 5G, 6G, or satellite communication. FIG. 1 is a simplified diagram of a wireless communication system according to this disclosure. As shown in FIG. 1, the wireless communication system includes a radio access network 100. The radio access network 100 may be a next generation (for example, 6G or a higher version) radio access network, or a conventional (for example, 5G, 4G, 3G, or 2G) radio access network. One or more communication devices (120a to 120j, which are collectively referred to as 120) may be interconnected or connected to one or more network devices (110a and 110b, which are collectively referred to as 110) in the radio access network 100. Optionally, FIG. 1 is merely a diagram. The wireless communication system may further include another device, for example, may further include a core network device, a wireless relay device, and/or a wireless backhaul device, which are not shown in FIG. 1.

Optionally, in actual application, the wireless communication system may include multiple network devices (also referred to as access network devices), or may include multiple communication devices. One network device may simultaneously serve one or more communication devices. One communication device may also simultaneously access one or more network devices. Quantities of communication devices and network devices included in the wireless communication system are not limited in this disclosure.

The network device may be an entity configured to send or receive a signal on a network side. The network device may be an access device via which the communication device accesses the wireless communication system in a wireless manner. For example, the network device may be a base station. The base station may cover various names in the following in a broad sense, or may be replaced with the following names, for example, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmission reception point (transmission reception point, TRP), a transmission point (transmission point, TP), a master eNodeB MeNB, a secondary eNodeB SeNB, a multi-standard radio (MSR) node, a home base station, a network controller, an access node, a radio node, an access point (AP), a transmission node, a transceiver node, a baseband unit (BBU), a radio remote unit (RRU), an active antenna unit (AAU), a radio-frequency head (RRH), a central unit (CU), a distributed unit (DU), a radio unit (radio unit, RU), a central unit control plane (CU control plane, CU-CP) node, a central unit user plane (CU user plane, CU-UP) node, and a positioning node. The base station may be a macro base station, a micro base station, a relay node, a donor node, or the like, or a combination thereof. Alternatively, the network device may be a communication module, a modem, or a chip disposed in the foregoing device or apparatus. Alternatively, the network device may be a mobile switching center, a device that takes on a base station function in device-to-device (Device-to-Device, D2D) communication, vehicle-to-everything (vehicle-to-everything, V2X) communication, and machine-to-machine (machine-to-machine, M2M) communication, a network side device in a 6G network, a device that takes on a base station function in a future communication system, or the like. The network device may support networks using a same access technology or different access technologies. A specific technology and a specific device form that are used for the network device are not limited in this disclosure.

The network device may be fixed or mobile. For example, the base stations 110a and 110b are stationary and are responsible for wireless transmission and reception in one or more cells from the communication device 120. A helicopter or uncrewed aerial vehicle 120i shown in FIG. 1 may be configured to serve as a mobile base station, and one or more cells may move based on a location of the mobile base station 120i. In other examples, the helicopter or uncrewed aerial vehicle (120i) may be configured to serve as a communication device communicating with the base station 110b.

In this disclosure, a communication apparatus configured to implement functions of the access network may be an access network device, may be a network device having some functions of the access network, or may be an apparatus that can support implementation of the functions of the access network, for example, a chip system, a hardware circuit, a software module, or a combination of a hardware circuit and a software module. The apparatus may be installed in the access network device or used together with the access network device. In the method disclosed in this disclosure, an example in which the communication apparatus configured to implement the function of the access network device is the access network device is used for description.

The communication device may be an entity, such as a mobile phone, configured to receive or transmit a signal on a user side. The communication device may be configured to connect a person, an object, and a machine. The communication device may communicate with one or more core networks via the network device. The communication device includes a handheld device having a wireless connection function, another processing device connected to a wireless modem, a vehicle-mounted device, or the like. The communication device may be a portable, pocket-sized, handheld, computer built-in, or vehicle-mounted mobile apparatus. The communication device 120 may be widely used in various scenarios, for example, cellular communication, device-to-device D2D, vehicle-to-everything V2X, peer-to-peer P2P, machine-to-machine M2M, machine type communication MTC, internet of things IoT, virtual reality VR, augmented reality AR, industrial control, self-driving, telemedicine, a smart grid, smart furniture, smart office, smart wearable, smart transportation, a smart city, an uncrewed aerial vehicle, a robot, remote sensing, passive sensing, positioning, navigation and tracking, and autonomous delivery and mobility. Some examples of the communication device 120 are 3GPP user equipment (UE), a fixed device, a mobile device, a handheld device, a wearable device, a cellular phone, a smartphone, a session initiation protocol (SIP) phone, a notebook computer, a personal computer, a smart book, a vehicle, a satellite, a global positioning system (GPS) device, a target tracking device, an uncrewed aerial vehicle, a helicopter, an aircraft, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device like a smartwatch, a virtual reality (virtual reality, VR) device, an augmented reality (augmented reality, AR) device, a wireless terminal in industrial control (industrial control), a terminal in an internet of vehicles system, a wireless terminal in self-driving (self-driving), a wireless terminal in the smart grid (smart grid), a wireless terminal in transportation safety (transportation safety), a wireless terminal like a smart fueler in the smart city (smart city), a terminal device on a highspeed railway, and a wireless terminal like a smart speaker, a smart coffee machine, and a smart printer in a smart home (smart home). The communication device 120 may be a wireless device in the foregoing various scenarios or an apparatus disposed in a wireless device, for example, a communication module, a modem, or a chip in the foregoing device. The communication device may also be referred to as a terminal, a terminal device, user equipment (user equipment, UE), a mobile station (mobile station, MS), or a mobile terminal (mobile terminal, MT). The communication device may alternatively be a communication device in a future wireless communication system. The communication device may be used in a dedicated network device or a general-purpose device. A specific technology and a specific device form that are used for the communication device are not limited in this disclosure.

Optionally, the communication device may be configured to serve as a base station. For example, the UE may serve as a scheduling entity that provides sidelink signals between UEs in V2X, D2D, P2P, or the like. As shown in FIG. 1, a cellular phone 120a and a car 120b communicate with each other by using sidelink signals. The cellular phone 120a communicates with a smart home device 120e without relaying a communication signal via the base station 110b.

In this disclosure, a communication apparatus configured to implement functions of the communication device may be a terminal device, may be a terminal device having some functions of the communication device, or may be an apparatus that can support implementation of the functions of the communication device, for example, a chip system. The apparatus may be installed in the terminal device or used together with the terminal device. In this disclosure, the chip system may include a chip, or may include a chip and another discrete component. In the technical solutions provided in this disclosure, an example in which the communication apparatus is the terminal device or the UE is used for description.

Optionally, the wireless communication system usually includes a cell, the base station provides cell management, and the base station provides a communication service for multiple mobile stations (mobile stations, MSs) in the cell. The base station includes a baseband unit (baseband unit, BBU) and a remote radio unit (remote radio unit, RRU). The BBU and the RRU may be deployed in different places. For example, the RRU is remotely deployed in a heavy-traffic region, and the BBU is deployed in a central equipment room. Alternatively, the BBU and the RRU may be deployed in a same equipment room. Alternatively, the BBU and the RRU may be different components at a same rack. Optionally, one cell may correspond to one carrier or component carrier.

It may be understood that this disclosure may be applied between a network device and a communication device, between network devices, or between communication devices, that is, between a primary device and a secondary device. The primary device may be a network device or a communication device. When the primary device is a network device, the secondary device may be another network device or a communication device. When the primary device is a communication device, the secondary device may be another communication device.

The following describes the solutions by using an example in which the primary device is a network device, for example, an access network device, and the secondary device is a communication device, for example, a terminal device. A communication direction corresponding to downlink is sending from the primary device to the secondary device, and a communication direction corresponding to uplink is sending from the secondary device to the primary device.

Protocol layer structure between an access network device and a terminal device

Communication between the access network device and the terminal device complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal may further include an artificial intelligence (artificial intelligence, AI) layer, used to transmit data related to an AI function.

Data transmission between the access network device and the terminal device is used as an example. Data transmission needs to pass through a user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer. The MAC layer generates a transport block, and then wireless transmission is performed through the physical layer. Data is encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal device may further have an application layer and a non-access stratum. The application layer may be used to provide a service for an application installed on the terminal device. For example, downlink data received by the terminal device may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be configured to forward user data. For example, the non-access stratum forwards uplink data received from the application layer to the SDAP layer, or forwards downlink data received from the SDAP layer to the application layer.

Structure of an access network device

The access network device may include a central unit (central unit, CU) and a distributed unit (distributed unit, DU). Multiple DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. The CU and the DU may be divided based on a protocol layer of a wireless network. For example, functions of a PDCP layer and a protocol layer above the PDCP layer are set on the CU, and functions of a protocol layer (for example, an RLC layer and a MAC layer) below the PDCP layer are set on the DU. For another example, functions of a protocol layer above a PDCP layer are set on the CU, and functions of the PDCP layer and a protocol layer below the PDCP layer are set on the DU.

It may be understood that division into processing functions of the CU and the DU based on the protocol layers is merely an example, and there may be another division manner. For example, the CU or the DU may be divided into functions having more protocol layers. For another example, the CU or the DU may be further divided into some processing functions having protocol layers. In a design, some functions of an RLC layer and a function of a protocol layer above the RLC layer are set on the CU, and a remaining function of the RLC layer and a function of a protocol layer below the RLC layer are set on the DU. In another design, division of functions of the CU or the DU may alternatively be performed based on service types or other system requirements. For example, division may be performed based on latencies. Functions whose processing time needs to satisfy a delay requirement are set on the DU, and functions whose processing time does not need to satisfy the delay requirement are set on the CU. In another design, the CU may alternatively have one or more functions of the core network. For example, the CU may be disposed on a network side to facilitate centralized management. In another design, an RU of the DU is disposed remotely. The RU has a radio frequency function.

Optionally, the DU and the RU may be divided at a physical layer (physical layer, PHY). For example, the DU may implement higher-layer functions of the PHY layer, and the RU may implement lower-layer functions of the PHY layer. When used for sending, a function of the PHY layer may include a cyclic redundancy check (cyclic redundancy check, CRC) code addition, channel coding, rate matching, scrambling, modulation, layer mapping, precoding, resource mapping, physical antenna mapping, and/or radio frequency sending function. When used for reception, a function of the PHY layer may include CRC, channel decoding, rate de-matching, descrambling, demodulation, layer de-mapping, channel detection, resource de-mapping, physical antenna de-mapping, and/or a radio frequency receiving function. The higher-layer function of the PHY layer may include some functions of the PHY layer. For example, the some functions are closer to the MAC layer. The lower-layer function of the PHY layer may include some other functions of the PHY layer. For example, the part of functions are closer to the radio frequency function. For example, the higher-layer function of the PHY layer may include CRC code addition, channel coding, rate matching, scrambling, modulation, and layer mapping, and the lower-layer function of the PHY layer may include precoding, resource mapping, physical antenna mapping, and radio frequency sending functions. Alternatively, the higher-layer function of the PHY layer may include CRC code addition, channel coding, rate matching, scrambling, modulation, layer mapping, and precoding. The lower-layer function of the PHY layer may include resource mapping, physical antenna mapping, and radio frequency sending functions.

For example, a function of the CU may be implemented by one entity, or may be implemented by different entities. For example, the function of the CU may be further divided. To be specific, a control plane and a user plane are separated and implemented by different entities, which are a control plane CU entity (namely, a CU-CP entity) and a user plane CU entity (namely, a CU-UP entity). The CU-CP entity and the CU-UP entity may be coupled to the DU, to jointly complete a function of the access network device.

In the foregoing architecture, signaling generated by the CU may be sent to a terminal device via the DU, or signaling generated by a terminal device may be sent to the CU via the DU. For example, signaling at an RRC layer or the PDCP layer is finally processed into signaling at the physical layer and sent to the terminal device, or is converted from signaling received from the physical layer. Based on such architectures, the signaling of the RRC layer or PDCP layer may be considered to be sent by using the DU, or sent by using the DU and the RU.

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. These modules and methods performed by the modules also fall within the protection scope of this disclosure.

It should be understood that quantities and types of devices in the communication system shown in FIG. 1 are merely used as an example, and this disclosure is not limited thereto. In actual application, the communication system may further include more terminal devices and more access network devices, and may further include another network element, for example, may include a core network device, a network management system, and/or a network element configured to implement an artificial intelligence function. The network management system may also be referred to as an operations, administration, and maintenance (operations, administration, and maintenance, OAM) network element, OAM for short. The operations mainly refer to routine analysis, prediction, planning, and configuration for networks and services. The maintenance mainly refers to routine operation activities for tests and fault management of networks and services. The network management system can detect a network running status, optimize network connections and performance, improve network running stability, and reduce network maintenance costs.

It may be understood that all or some functions implemented by one or more of the terminal device, the access network device, or the core network device may be virtualized, that is, implemented by one or more of a dedicated processor or a general purpose processor and a corresponding software module. Because the terminal device and the access network device are related to an air interface transmission interface, receiving and sending functions of the interface may be implemented by hardware. The core network device, such as the foregoing OAM, may be virtualized. Optionally, one or more functions of a virtualized terminal device, access network device, or core network device may be implemented by a cloud device, for example, implemented by a cloud device in an over-the-top (over the top, OTT) system.

The method provided in this disclosure may be used for communication between an access network device and a terminal device, or may be used for communication between other communications devices, for example, communication between a macro base station and a micro base station in a wireless backhaul link, communication between two terminal devices in a sidelink (sidelink, SL), communication between a terminal device and a network management system (OAM), and communication between a terminal device and a core network device. This is not limited.

The method provided in this disclosure relates to artificial intelligence (artificial intelligence, AI). For ease of understanding, the following describes some terms of AI in this disclosure with reference to A1 to A4. It may be understood that the description is not intended to limit this disclosure.

A1: AI model

The AI model is a specific implementation of an AI technology function. The AI model indicates a mapping relationship between an input and an output of the model. The AI model may be a neural network, a linear regression model, a decision tree model, a support vector machine (support vector machine, SVM), a Bayesian network, a Q-learning model, or another machine learning (machine learning, ML) model. In this disclosure, the AI model is referred to as a model for short below.

A2: Neural network

The neural network is a specific implementation form of an AI or machine learning technology. According to a universal approximation theorem, the neural network can theoretically approximate any continuous function, so that the neural network has a capability of learning any mapping.

An idea of the neural network comes from a neuron structure of brain tissue. For example, each neuron in a deep neural network (deep neural network, DNN) performs a weighted summation operation on input values of the neuron, and outputs an operation result by using an activation function. FIG. 2A is a diagram of a neuron structure. Assuming that inputs of a neuron are $x = [x_0, x_1, ..., x_n]$, weights corresponding to the inputs are respectively $w = [w, w_1, ..., w_n]$, where $w_i$ is a weight of $x_i$, and is used to perform weighting on $x_i$. An offset for performing weighted summation on the input values based on the weights is, for example, $b$. There may be multiple forms of the activation function. Assuming that an activation function of a neuron is $y = f(c) = \max(0, c)$, an output of the neuron is

$$y = f\left(\sum_{i=0}^{i=n} w_i * x_i + b\right) = \max\left(0, \sum_{i=0}^{i=n} w_i * x_i + b\right)$$

. For another example, assuming that an activation function of a neuron is $y = f(c) = c$, an output of the neuron is $y = f\left(\sum_{i=0}^{i=n} w_i * x_i + b\right) = \sum_{i=0}^{i=n} w_i * x_i + b$.

Herein, $b$, $w_i$, and $x_i$ may be various possible values such as a decimal, an integer (for example, 0, a positive integer, or a negative integer), or a complex number. Activation functions of different neurons in the neural network may be the same or different.

According to a network construction manner, the DNN may include a feedforward neural network (feedforward neural network, FNN), a convolutional neural network (convolutional neural network, CNN), and a recurrent neural network (recurrent neural network, RNN).

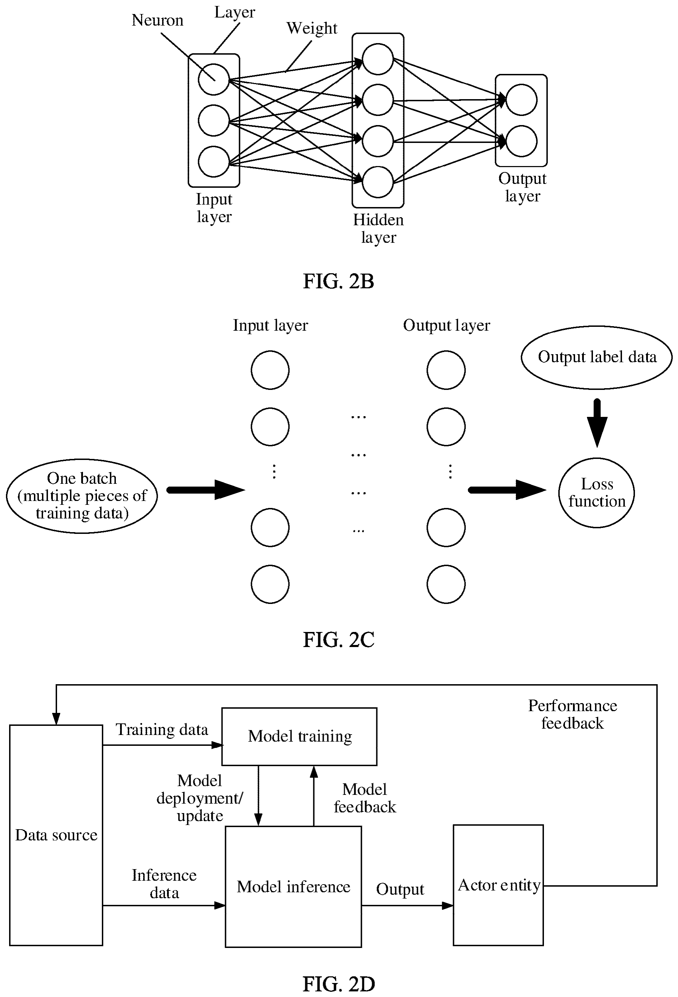

The neural network usually includes multiple layers, and each layer may include one or more neurons. A depth and/or a width of the neural network are/is increased, so that an expression capability of the neural network can be improved, and a more powerful information extraction and abstraction modeling capability can be provided for a complex system. The depth of the neural network may be a quantity of layers included in the neural network, and a quantity of neurons included in each layer may be referred to as a width of the layer. In an implementation, the neural network includes an input layer and an output layer. The input layer of the neural network performs neuron processing on received input information, and transfers a processing result to the output layer. The output layer obtains an output result of the neural network. In another implementation, the neural network includes an input layer, a hidden layer, and an output layer. Refer to an FNN shown in FIG. 2B. Neurons at adjacent layers in the FNN are completely connected. The input layer of the neural network performs neuron processing on received input information, and transfers a processing result to the intermediate hidden layer. The hidden layer performs calculation on the received processing result to obtain a calculation result. The hidden layer transfers the calculation result to the output layer or an adjacent hidden layer. Finally, the output layer obtains an output result of the neural network. One neural network may include one hidden layer, or include multiple hidden layers that are sequentially connected. This is not limited.

A3: Training data and inference data

A training data set is used to train a model. The training data set may include input data of the model, or include input data and target output data of the model. The training data set includes one or more pieces of training data, and the training data may be data input to the model, or may be target output data of the model. The target output data may also be referred to as a label, output label data, or an output label sample. The training data set is one of important parts of machine learning. In essence, training the model is to learn some characteristics of the model from the training data, so that the output data of the model is as close as possible to the target output data, for example, a difference between the output data and the target output data of the model is minimized. Composition and selection of the training data set can determine performance of the trained model to some extent.

In addition, a loss (loss) function may be defined in a training process of the model (for example, a neural network). The loss function describes a gap or difference between an output value and a target output value of the model. A specific form of the loss function is not limited in this disclosure. The training process of the model is a process in which a model parameter of the model is adjusted, so that a value of the loss function is less than a threshold, or a value of the loss function meets a target requirement.

The model parameter may include one or more of the following: a structure parameter of the model (for example, a quantity of layers and/or a weight of the model), for example, the model is a neural network, and the structure parameter of the neural network includes at least one of the following: a quantity of layers, a width, a weight of a neuron, or a parameter in an activation function of the neuron of the neural network; an input parameter of the model (for example, an input dimension and a quantity of input ports); and an output parameter of the model (for example, an output dimension and a quantity of output ports). It can be understood that the input dimension may be a size of one piece of input data. For example, when the input data is a sequence, an input dimension corresponding to the sequence may indicate a length of the sequence. The quantity of input ports may be an amount of input data. Similarly, the output dimension may be a size of one piece of output data. For example, when the output data is a sequence, an output dimension corresponding to the sequence may indicate a length of the sequence. The quantity of output ports may be an amount of output data.

In addition, the neural network may process data in batches, to implement parallel computing to speed up training. As shown in FIG. 2C, in one iteration of the neural network, multiple pieces of training data are selected to form one batch (batch), and the batch is input to the neural network, to obtain output data. The output data and output label data are input to the loss function, to output a loss of the current round. Then, each structure parameter of the neural network is updated based on a step parameter, to complete one iteration in the training process. A batch size represents an amount of training data processed in each batch. As shown in FIG. 2C, one batch includes n pieces of training data.

The inference data may be used as an input of the trained model for model inference, to verify or monitor model performance. During model inference, the inference data is input into the model, to obtain a corresponding output, namely, an inference result. Optionally, the input data of the model included in the training data set may alternatively be used as inference data for model inference, to verify or monitor model performance.

A4: AI model design

The AI model design mainly includes a data collection phase (for example, collection of training data and/or inference data), a model training phase, and a model inference phase, and may further include an inference result application phase. FIG. 2D shows an AI application framework. In the data collection phase, a data source (data source) is configured to provide a training data set and inference data. In the model training phase, training data (training data) provided by the data source is analyzed or trained to obtain an AI model. The AI model represents a mapping relationship between an input and an output of the model. Obtaining the AI model through learning by using a model training node is equivalent to obtaining the mapping relationship between the input and the output of the model through learning by using the training data. In the model inference phase, the AI model obtained through training in the model training phase is used to perform inference based on the inference data provided by the data source, to obtain an inference result. This phase may also be understood as follows: The inference data is input into the AI model, to obtain output data by using the AI model. The output data is the inference result. The inference result may indicate a configuration parameter used (executed) by an actor object, and/or an operation performed by the actor object. The inference result is published in the inference result application phase. For example, the inference result may be planned by a same actor (actor) entity. For example, the actor entity may send the inference result to one or more actor objects (for example, a core network device, an access network device, a terminal device, or a network management system) for execution. For another example, the actor entity may further feed back performance of the model to the data source, to facilitate subsequent model updating.

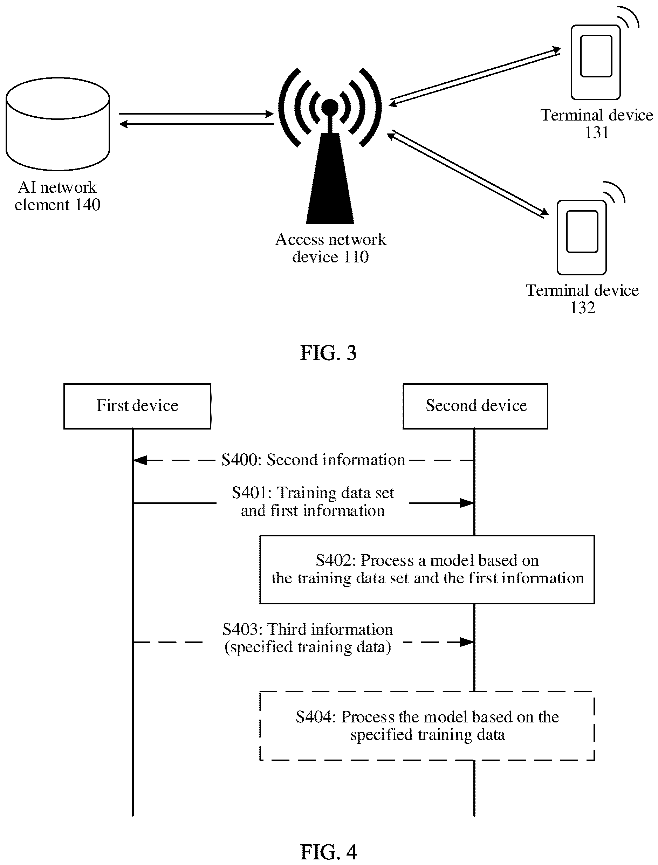

It may be understood that a communication system may include a network element having an artificial intelligence function. The foregoing phases related to the AI model design may be performed by one or more network elements having the artificial intelligence function. In a possible design, the AI function (for example, an AI module or an AI entity) may be configured in an existing network element in the communication system, to implement an AI-related operation, for example, AI model training and/or inference. For example, the existing network element may be an access network device (for example, a gNB), a terminal device, a core network device, a network management system, or the like. The operations mainly refer to routine analysis, prediction, planning, and configuration for networks and services. The maintenance mainly refers to routine operation activities for tests and fault management of networks and services. The network management system can detect a network running status, optimize network connections and performance, improve network running stability, and reduce network maintenance costs. Alternatively, in another possible design, an independent network element may be introduced into the communication system to perform an AI-related operation, for example, AI model training. The independent network element may be referred to as an AI network element, an AI node, or the like. The name is not limited in this disclosure. The AI network element may be directly connected to the access network device in the communication system, or may be indirectly connected to the access network device via a third-party network element. The third-party network element may be a core network device, for example, an authentication management function (authentication management function, AMF) network element or a user plane function (user plane function, UPF) network element, a network management system, a cloud server, or another network element. This is not limited. For example, FIG. 3 shows a communication system. The communication system includes a network device 110, a terminal device 131, and a terminal device 132. In addition, an AI network element 140 is further introduced into the communication system shown in FIG. 3. Optionally, the AI network element may be located in a server, for example, located in a host or a cloud server of an OTT system.

In this disclosure, one parameter or multiple parameters may be obtained through inference by using one model. Training processes for different models may be deployed on different devices or nodes, or may be deployed on a same device or node. Inference processes for different models may be deployed on different devices or nodes, or may be deployed on a same device or node. This is not limited in this disclosure.

This disclosure relates to model processing, such as model training, model update, model performance verification or monitoring, and the like. The model training may be initial training, or may be retraining. The model performance verification or monitoring may be implemented during model inference. A training data set used for model processing may include collected raw data and augmented data obtained after the raw data is processed based on an augmentation algorithm. In the following, the raw data is denoted as first-type training data, and the augmented data is denoted as second-type training data. The second-type training data is obtained by processing the first-type training data based on an augmentation algorithm. It may be understood that, in this disclosure, "first-type" and "second-type" are merely used to distinguish whether data is collected or obtained by performing processing based on an augmentation algorithm, that is, distinguish the data from data performance, and may be replaced with "first" and "second". A type of the first-type training data or a type of the second-type training data in the following is a type to which data belongs from a physical characteristic of the data, for example, a channel impulse response type, a power delay profile type, or a channel state information type. The data type is related to an application scenario of an AI model that uses the data, and will be described in detail below.

The method provided in this disclosure is cooperatively executed by multiple devices (or referred to as multiple network elements, multiple nodes, and multiple entities), and supports model processing by using first-type training data and/or second-type training data. This is relatively flexible, and helps improve model performance in a wireless communication network. FIG. 4 is a schematic flowchart of a communication method, involving interaction between a first device and a second device. The first device is a device that provides a training data set, for example, corresponding to the data source in FIG. 2D. Because the training data set relates to augmented data, the first device may also be referred to as an augmented data computing entity. The second device is a device that performs model processing by using part of or all training data in the training data set. The second device may also be referred to as an augmented data use entity, for example, corresponding to the model training phase or the model inference phase in FIG. 2D. For example, the first device may be the foregoing access network device, and the second device may be the foregoing communication device (for example, the terminal device). The method mainly includes the following steps.

S401: The first device sends a training data set and first information to the second device.

It may be understood that the training data set and the first information are used to process a model. The first information indicates identification information corresponding to one or more pieces of training data in the training data set, and the identification information indicates that the corresponding training data belongs to first-type training data or second-type training data. The first device may perform data augmentation on the first-type training data by using an augmentation algorithm, to obtain the second-type training data. Optionally, different training data may be processed by using a same augmentation algorithm or different augmentation algorithms. This is not limited in this disclosure. Such a design can extend training data, enhance diversity of training data, avoid sample imbalance and training overfitting, and improve model robustness and a model generalization capability.

Some examples of the augmentation algorithm include one or more of the following algorithms: interpolation, translation, random rotation, left-right and/or up-down flipping about a central position, amplification and shrinking, normalization, averaging, sampling, copying, and the like.

Some examples of the augmentation algorithm for a channel measurement result include one or more of the following:

randomly rotating a phase of the channel measurement result;
randomly amplifying and shrinking an amplitude of the channel measurement result;
performing time-domain sampling point translation on the channel measurement result;
performing one or more operations of normalization, averaging, and repeated sampling on the channel measurement result in a time-domain sampling point dimension, a frequency domain sampling subband dimension, or an antenna port (port) dimension; or
performing a random operation such as zero padding or copying an adjacent value on the channel measurement result in one or more of a time-domain sampling point dimension, a frequency domain sampling subband dimension, or an antenna port dimension.

Optionally, the first-type training data in the training data set may include first input data of the model collected by the first device and/or first output label data of the model collected by the first device, and the second-type training data may include second input data obtained by the first device by processing the collected first input data based on the augmentation algorithm and/or second output label data obtained by the first device by processing the collected first output label data based on the augmentation algorithm.

Optionally, one piece of training data in the training data set may correspond to one piece of identification information, or multiple pieces of training data in the training data set may correspond to one piece of identification information. For example, the training data set includes N1 groups of training data, and the first information includes N2 pieces of identification information, where N1 is greater than or equal to N2, and N1 and N2 are positive integers.

An $i^{th}$ part of groups of training data in the N1 groups of training data corresponds to an $i^{th}$ piece of identification information, where i is a positive integer from 1 to N2, and the $i^{th}$ piece of identification information indicates that all training data in the $i^{th}$ part of groups of training data belongs to the first-type training data or the second-type training data. It may be understood that the $i^{th}$ part of groups of training data includes one or more groups of training data in the N1 groups of training data.

For example, the $i^{th}$ piece of identification information is 0 or 1. When the $i^{th}$ piece of identification information is 0, it indicates that all the training data in the $i^{th}$ part of groups of training data belongs to the first-type training data; or when the $i^{th}$ piece of identification information is 1, it indicates that all the training data in the $i^{th}$ part of groups of training data belongs to the first-type training data; or vice versa: when the $i^{th}$ piece of identification information is 1, it indicates that all the training data in the $i^{th}$ part of groups of training data belongs to the first-type training data; or when the $i^{th}$ piece of identification information is 0, it indicates that all the training data in the $i^{th}$ part of groups of training data belongs to the first-type training data.

For example, the $i^{th}$ piece of identification information may be an $i^{th}$ confidence. For example, if all the training data in the $i^{th}$ part of groups of training data corresponding to the $i^{th}$ piece of identification information belongs to the first-type training data (for example, raw data), the $i^{th}$ confidence is 1. For another example, if all the training data in the $i^{th}$ part of groups of training data corresponding to the $i^{th}$ piece of identification information belongs to the second-type training data (for example, augmented data), the $i^{th}$ confidence is less than 1. For example, the $i^{th}$ confidence is 0.8, indicating that a reliability degree of the $i^{th}$ part of groups of training data is equivalent to 80% of the raw data.

In addition, it may be understood that training data that belongs to the second-type training data but falls in different groups may correspond to a same confidence or different confidences. For example, all training data in an $(i+1)^{th}$ part of groups of training data also belongs to the second-type training data. The $i^{th}$ confidence and an $(i+1)^{th}$ confidence may be the same or different. For example, the $(i+1)^{th}$ confidence is 0.8, indicating that a reliability degree of the $(i+1)^{th}$ part of groups of training data is equivalent to 80% of the raw data. For another example, the $(i+1)^{th}$ confidence is 0.6, indicating that a reliability degree of the $(i+1)^{th}$ part of groups of training data is equivalent to 60% of the raw data. Optionally, different reliability degrees of the augmented data may be caused by different augmentation methods. For example, a reliability degree of data obtained after double interpolation is performed on the raw data is higher than a reliability degree of data obtained after quadruple interpolation is performed on the raw data. This is not limited in this disclosure.

For example, it may be predefined that each of the N1 groups of training data belongs to the first-type training data or the second-type training data, and a mapping relationship between a group identifier (group ID) and information to which the group identifier belongs (that is, the group identifier belongs to the first-type training data or the second-type training data) is established. Alternatively, the $i^{th}$ piece of identification information may be a group identifier (group ID) corresponding to the $i^{th}$ part of groups of training data, to indicate that all the training data in the $i^{th}$ part of groups of training data belongs to the first-type training data or the second-type training data.

In a possible implementation, the $i^{th}$ part of groups of training data includes an $i^{th}$ group of training data in the N1 groups of training data, that is, N1 is equal to N2. In this implementation, the $i^{th}$ piece of identification information may be 0 or 1, or the confidence described above, or may be a group identifier (group ID) of the $i^{th}$ group of training data. In another possible implementation, the $i^{th}$ part of groups of training data includes multiple consecutive groups of training data in the N1 groups of training data. In this implementation, the $i^{th}$ piece of identification information may be 0 or 1, or the confidence described above, or may be a group identifier (group ID) set of the multiple consecutive groups of training data. Optionally, the $i^{th}$ part of groups of training data may be training data collected or obtained through augmentation by the first device in a same time period, that is, the $i^{th}$ part of groups of training data corresponds to same time information, for example, is denoted as an $i^{th}$ piece of time information. In addition, it may be understood that content indicated by the $i^{th}$ piece of identification information is different from content indicated by the $(i+1)^{th}$ piece of identification information.

Optionally, the training data in the training data set may be grouped into two groups based on the first-type training data and the second-type training data, and N1 is equal to N2 is equal to 2. Alternatively, the training data in the training data set may be grouped into groups by batch (batch), and the obtained N1 groups of training data refer to N1 batches. Each batch includes a specific amount of training data. In an optional implementation, an $i^{th}$ batch in the N1 batches corresponds to the $i^{th}$ piece of identification information. When the $i^{th}$ piece of identification information is a group identifier, the $i^{th}$ piece of identification information may be a number of the $i^{th}$ batch. For example, the batches in the training data set are numbered from 0, and a $1^{st}$ piece of identification information corresponding to a $1^{st}$ batch may be 0. In another optional implementation, multiple consecutive batches in the N1 batches correspond to the $i^{th}$ piece of identification information. When the $i^{th}$ piece of identification information is a group identifier set, the $i^{th}$ piece of identification information may be a set of numbers of the multiple consecutive batches. For example, the batches in the training data set are numbered from 0, batches 0 to 3 correspond to a $1^{st}$ piece of identification information, and the $1^{st}$ piece of identification information may be represented as $\{0, 1, 2, 3\}$, that is, a set of corresponding batch numbers; or may be represented as 0 to 3; or may be represented as $\{0, 3\}$, that is, {start batch number, end batch number}; or may be represented as $\{0, 4\}$, that is, {start batch number, quantity of consecutive batches corresponding to the start batch number}.

Optionally, a manner of sending the training data set by the first device may be understood with reference to the following content:

The first device sends N2 pieces of signaling to the second device, where an $i^{th}$ piece of signaling in the N2 pieces of signaling includes the $i^{th}$ part of groups of training data in the N1 groups of training data. With reference to the $i^{th}$ part of groups of training data corresponding to the $i^{th}$ piece of identification information, it may be understood that the $i^{th}$ piece of signaling corresponds to the $i^{th}$ piece of identification information. The second device may determine, based on the $i^{th}$ piece of identification information in the first information, that the training data in the $i^{th}$ piece of signaling belongs to the first-type training data or the second-type training data.

In a possible implementation, the first device may actively send the training data set and the first information to the second device. In another possible implementation, the first device may send the training data set and the first information to the second device under trigger of the second device or another device. For example, FIG. 4 shows an optional step S400 before S401: The second device sends second information to the first device, where the second information is used to request training data. It may be understood that the first device may perform augmentation on the first-type training data after receiving the second information, or may perform augmentation on the first-type training data in advance, and send the training data set and the first information after receiving the second information. Optionally, the second information may include one or more of the following: a type of the training data, an amount of the training data, data quality indicator information corresponding to the training data, or a function of a model, where the function of the model may be represented as a type of input data and a type of output data of the model. The first device may determine, based on the second information, the training data included in the training data set.

S402: The second device process the model based on the training data set and the first information.

Optionally, corresponding to different processing tasks, the second device may select different training data from the training data set based on the training data set and the first information, to process the model. For example, when a processing task of the model corresponds to a first value, the model is processed based on all or part of data in the first-type training data; or when a processing task of the model corresponds to a second value, the model is processed based on all or part of data in the first-type training data and all or part of data in the second-type training data; or when a processing task of the model corresponds to a third value, the model is processed based on all or part of data in the second-type training data.

For example, the processing task of the model may be one or more of the foregoing initial model training, model retraining, model update, model performance monitoring, or model performance verification. The initial model training and the model retraining may correspond to the second value or the third value. When the model update involves update of some layers of the model, the model update may correspond to the first value or the third value. The model performance monitoring or verification may correspond to the first value or the third value. It may be understood that the first value, the second value, and the third value may be considered as type information of the processing task of the model, and different types of processing tasks use different types of training data, or different combinations of training data types. In addition, in different application scenarios, a same processing task may belong to different types.

In addition, optionally, the first device may further indicate the second device to perform model processing by using specified training data, which is applied to a scenario in which model processing needs to be performed on both the first device side and the second device side, so that training data used when the two devices perform model processing can be unified, thereby helping improve a matching degree and performance of models of the two devices. For example, FIG. 4 further shows the following optional steps S403 and S404. It may be understood that step S402 and steps S403 and S404 in this disclosure may be considered as a parallel solution. To be specific, if S402 is performed, but S403 and S404 are not performed, it indicates that the second device determines the training data actually used for model processing. If S402 is not performed, but S403 and S404 are performed, it indicates that the second device determines, under an indication of the first device, the training data actually used for model processing.

S403: The first device sends third information to the second device, where the third information indicates specified training data in the training data set.

The specified training data includes all or part of data in the training data set, and the specified training data is used to process the model.

For ease of implementation, the following uses an example of an implementation related to the third information.

In a first optional implementation, the third information includes a group identifier corresponding to the specified training data. For example, the specified training data includes at least one group of training data in the N1 groups of training data, and the third information may include a group identifier corresponding to the at least one group of training data. For example, when one group of training data is one batch, the third information may include a number of at least one batch. Similarly, when the N1 groups of training data are two groups of training data, one group is first-type training data, and the other group is second-type training data, the specified training data may be one group of training data in the two groups of training data, that is, the specified training data includes all first-type training data or all second-type training data in the training data set. In this case, the third information may also include identification information corresponding to the specified training data, for example, 0/1, for example, a confidence.

In a second optional implementation, specified training data corresponding to different processing tasks of the model may be predefined, that is, a mapping relationship between a processing task of the model and specified training data is established. For example, N1=6, and the training data set includes six batches. It may be predefined that a processing task of model update corresponds to batches 0 to 3 in the six batches, and a processing task of initial model training corresponds to batches 0 to 5 in the six batches. Based on this, the first device includes indication information of a processing task of the model in the third information, and the second device may determine the corresponding specified training data based on the processing task of the model indicated in the third information.

In a third optional implementation, corresponding to the description in S401, when the first device indicates the training data set to the second device by sending the N2 pieces of signaling, the third information may include signaling identifiers of some of the N2 pieces of signaling. In this way, the second device may determine, based on the signaling identifiers in the third information, that the specified training data includes training data in the some of the N2 pieces of signaling.

In a fourth optional implementation, corresponding to the description in S401, the $i^{th}$ part of groups of training data in the N groups of training data may be training data collected or obtained through augmentation by the first device in a same time period. The third information may include at least one piece of time information. In this way, the second device may determine, based on the third information, that the specified training data includes training data corresponding to the at least one piece of time information.

S404: The second device processes the model based on the specified training data.

For a definition of model processing, refer to the foregoing content for understanding. Details are not described in this disclosure.

According to the foregoing method provided in this disclosure, collected raw data and/or data obtained through augmentation may be selected based on an indication or a model processing task, to perform model processing. In this way, model processing flexibility is improved while a model generalization capability is improved by extending training data, thereby helping improve model performance.

The following describes an application scenario of the foregoing communication method by using an example.

Scenario 1: AI-based channel state information (channel state information, CSI) feedback

AI is introduced into a wireless communication network to generate an AI-based CSI feedback manner. The terminal device measures a channel state information reference signal (channel state information reference signal, CSI-RS) sent by the access network device, and estimates CSI in downlink channel information, which is denoted as raw CSI. The terminal device compresses and quantizes the raw CSI by using an AI model, and then sends compressed and quantized CSI to the access network device. The access network device dequantizes and decompresses the received compressed and quantized CSI by using the AI model, to obtain the restored CSI.

Specifically, an autoencoder (autoencoder, AE) may be introduced into the CSI feedback, to construct an autoencoder-based CSI feedback manner. The autoencoder is an unsupervised learning neural network, and is characterized by using input data as label data. Therefore, the autoencoder may also be understood as a self-supervised learning neural network. The autoencoder may be configured to compress and restore data. The autoencoder may generally refer to a network structure including two sub-models. The autoencoder may also be referred to as a bilateral model, a dual-end model, or a collaborative model. For example, the autoencoder includes two parts: an encoder (encoder) and a decoder (decoder). The encoder and the decoder are used in a matching manner. It may be understood that the encoder and the decoder are matching AI models.

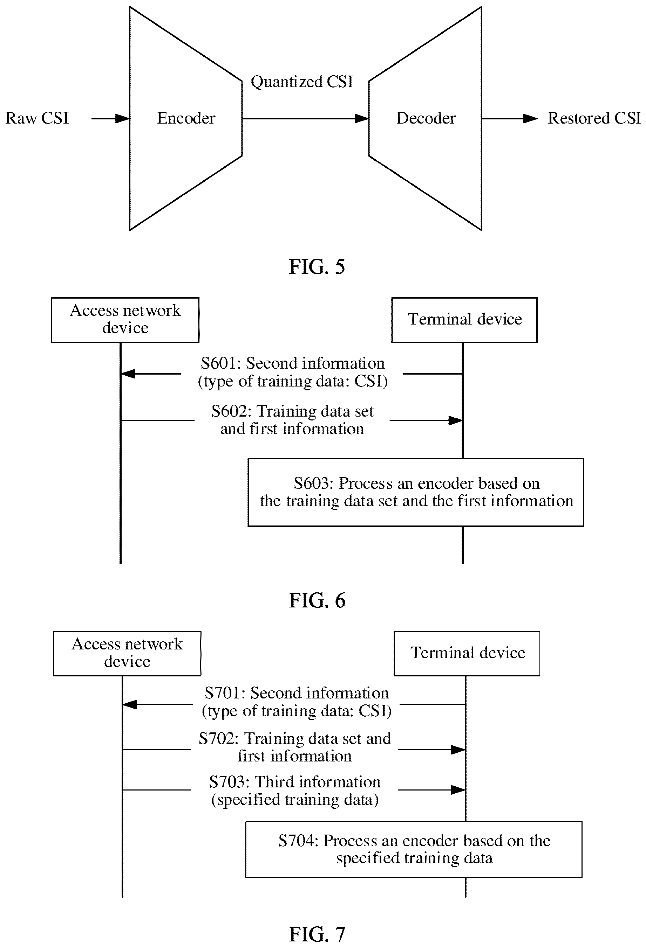

For example, the encoder in the autoencoder may encode (for example, compress) raw information A to obtain encoded information B; and the decoder in the autoencoder may decode the encoded information B to obtain decoded information A' corresponding to the raw information A. Optionally, the decoded information A' may also be described as the restored raw information A. It may be understood that the decoder is an inverse operation of the encoder. For example, encoding of the encoder includes compression, and decoding of the decoder includes decompression. In a CSI feedback scenario, FIG. 5 shows an autoencoder-based CSI feedback manner. An encoder in an autoencoder is deployed in a terminal device, and the encoder has compression and quantization functions. The terminal device inputs raw CSI to the encoder, and the encoder outputs quantized CSI based on the raw CSI. A decoder in the autoencoder is deployed in an access network device, and the decoder has dequantization and decompression functions. The access network device inputs the received quantized CSI based on the raw CSI to the decoder, and the decoder outputs the restored CSI.

The encoder in the autoencoder may be trained and updated in the terminal device or another device that communicates with the terminal device. This embodiment is described by using an example in which the encoder is in the terminal device. If the encoder is trained and updated in the another device, the terminal device sends training and update related information to the another device. Corresponding to the foregoing communication method, the access network device in this scenario may be a first device, and the terminal device may be a second device. In other words, the access network device provides, for the terminal device, a training data set used for processing the encoder. A type of first-type training data in the training data set is channel state information CSI (for example, the foregoing raw CSI), and a type of second-type training data in the training data set is also CSI (for example, augmented CSI obtained after the raw CSI is processed based on an augmentation algorithm). In a possible implementation, multiple terminal devices managed by the access network device each may report, to the access network device, an estimation result $H$ obtained by measuring a CSI-RS by each terminal device. $H$ represents the raw CSI. In other words, the access network device may collect the raw CSI from the multiple terminal devices. Then, the access network device may perform augmentation on the collected raw CSI by using the augmentation algorithm, for example, perform augmentation on the raw CSI by multiplying a frequency domain matrix by a random cosine phase, to obtain the augmented CSI, which is represented as $H' = H * e^{j\theta}, \theta \in (0, 2\pi)$.

For example, FIG. 6 shows a communication method, involving interaction between a terminal device and an access network device. The terminal device is an example of the foregoing second device, and the access network device is an example of the foregoing first device. The communication method may be applied to the foregoing AI-based CSI feedback scenario, to implement processing on an encoder. The method includes the following steps.

S601: The terminal device sends second information to the access network device, where the second information is used to request training data.

The second information may include one or more of the following: a type of the training data, an amount of the training data, data quality indicator information of the training data, or a function of a to-be-processed model. In the method shown in FIG. 6, the type of the training data is CSI, and the function of the to-be-processed model may be represented by using an input/output. For example, input data of the model is CSI, and output data of the model is compressed CSI. Alternatively, the function of the to-be-processed model is described as being used to implement the encoder in the foregoing autoencoder. For example, the data quality indicator information of the CSI may include one or more of the following: a first-path power, a first-path arrival delay, a timing error group (timing error group, TEG), average power of time-domain sampling points, a phase difference between antenna ports, a full-band or subband equivalent SINR (signal to interference plus noise ratio, SINR), a full-band or subband interference level, a line of sight (line of light, LOS) probability, an inter-site synchronization error, or a measurement result confidence.

S602: The access network device sends a training data set and first information to the terminal device.

The access network device may obtain raw CSI from multiple terminal devices, or in a scenario in which the terminal devices upload the raw CSI to a cloud server, the access network device may obtain the raw CSI of the multiple terminal devices from the cloud server. Then, the access network device may perform augmentation on the obtained raw CSI by using an augmentation algorithm, to obtain augmented CSI. The access network device constructs a training data set by using the obtained raw CSI and the obtained augmented CSI. Optionally, first-type training data included in the training data set is the raw CSI, and second-type training data is the augmented CSI.

Optionally, corresponding to S601, the training data set constructed by the access network device meets the type of the training data, the amount of the training data, and/or the quality indicator information of the training data that are/is required in the second information.

For example, in the first information, 0/1 is used to distinguish between the raw CSI and the augmented CSI in the training data set. For example, identification information corresponding to the raw CSI in the training data set is 0, and identification information corresponding to the augmented CSI in the training data set is 1.

Optionally, if the training data in the training data set is grouped into N1 batches by batch, the first information may include identification information corresponding to each batch in the N1 batches. For example, when identification information corresponding to a batch is 0, it indicates that all training data in the batch belongs to the raw CSI; or when identification information corresponding to a batch is 1, it indicates that all training data in the batch belongs to the augmented CSI.

S603: The terminal device processes the encoder based on the training data set and the first information.

For example, processing on the encoder is initial training or retraining on the encoder, and the terminal device may perform initial training or retraining on the encoder based on the raw CSI and the augmented CSI that are included in the training data set. Corresponding to S602, it may be understood that the raw CSI in the training data set is from the multiple terminal devices managed by the access network device. In this design, the encoder can be jointly trained based on the CSI of the multiple terminal devices, and a model generalization capability can be improved.

For another example, processing on the encoder is update on the encoder, and mainly involves update on some key layers in an AI model of the encoder. The terminal device may select, based on the identification information corresponding to each batch in the first information, a batch whose identification information is 0, that is, a batch that belongs to the raw CSI in the training data set, so that the terminal device can update the encoder by using the batch that belongs to the raw CSI.

In addition, a decoder in the autoencoder is deployed in the access network device, and may be trained and updated in the access network device. Considering that the encoder and the decoder need to be used in a matching manner, the terminal device side and the access network device side use same training data to perform model processing, so that a degree of matching between the encoder and the decoder can be improved. For example, FIG. 7 shows a communication method, involving interaction between a terminal device and an access network device. The terminal device is an example of the foregoing second device, and the access network device is an example of the foregoing first device. The communication method may be applied to the foregoing AI-based CSI feedback scenario, to implement processing on an encoder.

S701: The terminal device sends second information to the access network device, where the second information is used to request training data.

This step may be implemented with reference to S601. Details are not described in this disclosure.

S702: The access network device sends a training data set and first information to the terminal device.

This step may be implemented with reference to S602. Details are not described in this disclosure.

S703: The access network device sends third information to the terminal device, where the third information indicates specified training data in the training data set.

This step may be understood with reference to S403. Details are not described in this disclosure.

S704: The terminal device processes the encoder based on the specified training data.

This step may be understood with reference to S404. Details are not described in this disclosure.

Scenario 2: AI-based terminal positioning

(1) In a downlink positioning scenario, multiple access network devices or cell nodes of the access network devices send positioning reference signals (positioning reference signal, PRS) to a terminal device, and the terminal device measures PRSs to obtain downlink channel responses. In a possible implementation, an AI model used for positioning may be deployed in the terminal device, the terminal device may input the multiple obtained downlink channel responses into the AI model, and the AI model outputs location information of the terminal device. In another possible implementation, an AI model used for positioning may be deployed in an LMF. The terminal device may report the obtained downlink channel responses to the LMF, or the terminal device may extract characteristics from the obtained downlink channel responses based on the AI model, and report the characteristics based on the downlink channel responses to the LMF. The LMF may input the obtained downlink channel responses or the characteristics based on the downlink channel responses into the AI model used for positioning, and the AI model used for positioning outputs location information of the terminal device.

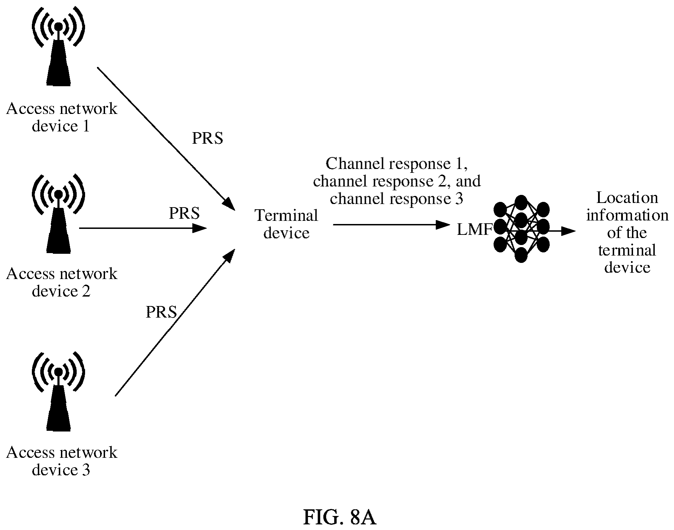

For example, FIG. 8A shows an AI-based downlink positioning scenario, in which an AI model used for positioning is deployed on an LMF side. Multiple access network devices, that is, an access network device 1, an access network device 2, and an access network device 3, send PRSs to a terminal device. The terminal device measures the multiple PRSs to obtain multiple downlink channel responses, that is, a channel response 1, a channel response 2, and a channel response 3. The terminal device sends the multiple downlink channel responses to the LMF, and the LMF uses the multiple downlink channel responses as an input of the AI model used for positioning, and outputs location information of the terminal device.

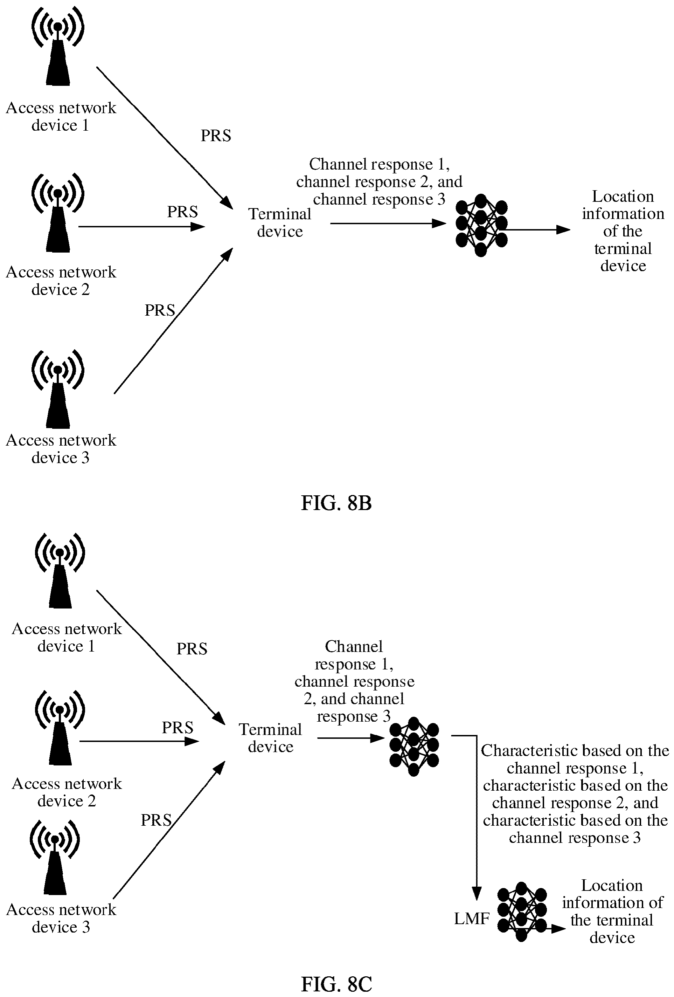

For example, FIG. 8B shows an AI-based downlink positioning scenario, in which an AI model used for positioning is deployed on a terminal device side. Multiple access network devices, that is, an access network device 1, an access network device 2, and an access network device 3, send PRSs to a terminal device. The terminal device measures the multiple PRSs to obtain multiple downlink channel responses, that is, a channel response 1, a channel response 2, and a channel response 3. The terminal device uses the multiple downlink channel responses as an input of the AI model used for positioning, and outputs location information of the terminal device. It may be understood that, different from the method shown in FIG. 8A in which the LMF outputs the location information of the terminal device, in the method shown in FIG. 8B, the terminal device outputs the location information of the terminal device.

FIG. 8C shows another AI-based downlink positioning scenario. An AI model may be deployed on a terminal device side and an LMF side. The terminal device measures PRSs of multiple access network devices to obtain multiple downlink channel responses, that is, a channel response 1, a channel response 2, and a channel response 3. The terminal device uses, based on the AI model deployed on the terminal device, the multiple obtained downlink channel responses as an input of the AI model, and outputs characteristics based on the multiple downlink channel responses, which are referred to as multiple channel characteristics for short, including a channel characteristic 1, a channel characteristic 2, and a channel characteristic 3. The terminal device sends the multiple channel characteristics to the LMF. The LMF uses the multiple downlink channel responses as an input of the AI model used for positioning, and outputs location information of the terminal device. It may be understood that, in the method shown in FIG. 8C, the LMF outputs the location of the terminal device. However, different from the method shown in FIG. 8A in which the input information of the AI model in the LMF is the channel responses, in FIG. 8C, the input information of the AI model in the LMF is the characteristics of the channel responses obtained by the terminal device. It may be understood that the AI model of the terminal device may be located in the terminal device, or may be located in another device that communicates with the terminal device, for example, a cloud server. The foregoing downlink channel response may be a channel impulse response (channel impulse response, CIR), a power delay profile (power delay profile, PDP), a channel frequency response (channel frequency response, CFR), or an angle of arrival (angle of arrival, AOA) corresponding to the terminal device and/or a time of arrival (time of arrival, TOA) corresponding to the terminal device.

The following uses an example in which an AI model is deployed on a terminal device side in a downlink positioning scenario to describe in detail a manner in which the foregoing communication method is applied to processing of the AI model on the terminal device side.

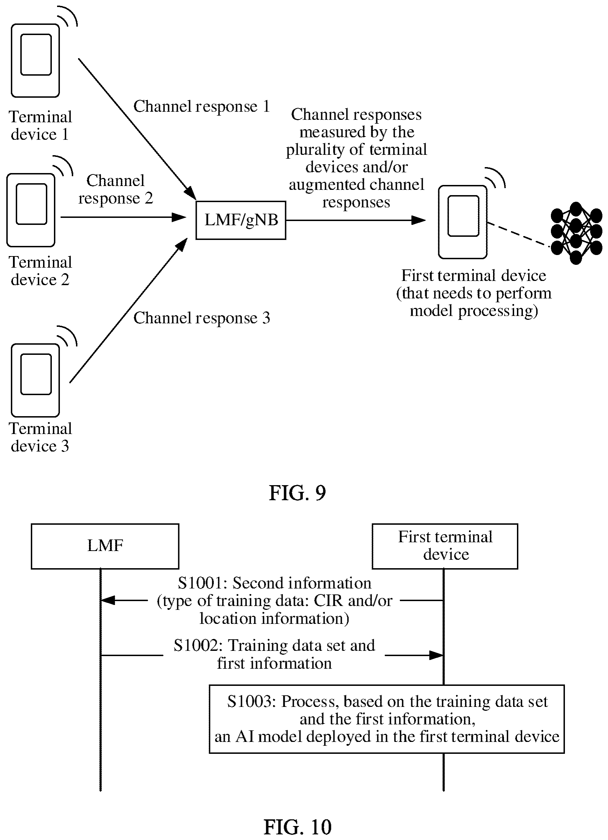

FIG. 9 shows an application framework of model processing in a downlink positioning scenario. An LMF or a gNB (that is, an example of an access network device) receives downlink channel responses measured by multiple terminal devices, that is, a channel response 1, a channel response 2, and a channel response 3. It may be understood that, as shown in FIG. 8A, FIG. 8B, or FIG. 8C, the terminal device may obtain the downlink channel responses through measurement based on the PRSs delivered by the access network device. The multiple terminal devices may send the downlink channel responses obtained through measurement to the LMF or the gNB.

After performing augmentation on the downlink channel responses of the multiple terminal devices, the LMF may send, to a first terminal device that needs to perform model processing, the downlink channel responses measured by the multiple terminal devices and/or the augmented downlink channel responses. In this way, the first terminal device may process, by using the downlink channel responses measured by the multiple terminal devices and/or the augmented downlink channel responses, an AI model deployed in the first terminal device shown in FIG. 8B or FIG. 8C.

For ease of implementation, FIG. 10 shows a communication method, involving interaction between a first terminal device and an LMF. The first terminal device is an example of the foregoing second device, and the LMF is an example of the foregoing first device. An AI model deployed in the first terminal device may be processed. The method includes the following steps.

S1001: The first terminal device sends second information to the LMF, where the second information is used to request training data.

Optionally, the second information may include one or more of the following: a type of the training data, an amount of the training data, or data quality indicator information corresponding to the training data.

In the method shown in FIG. 10, the type of the training data includes a type of input data and/or a type of output label data of the model. For example, in the scenario shown in FIG. 8B, the type of the input data may be a channel response, for example, a CIR, and the type of the output label data may be location information of the terminal device. For another example, in the scenario shown in FIG. 8C, the type of the input data may be a channel response, for example, a CIR, and the type of the output label data may be a characteristic based on the channel response, for example, the CIR. For example, the data quality indicator information corresponding to the CIR includes one or more of the following: a quantity of paths, in the CIR, whose power is greater than k times a first-path power, where k is a positive number and may be a decimal or an integer, an average power of multiple sampling points, an LOS probability, a parameter that reflects an NLOS degree of a channel, a reference signal received power (reference signal received power, RSRP), or a moving speed of the terminal device.

S1002: The LMF sends a training data set and first information to the first terminal device.

The LMF may obtain, from multiple terminal devices, CIRs obtained by measuring PRSs, or in a scenario in which terminal devices upload CIRs obtained by measuring PRSs to a cloud server, the LMF may obtain, from the cloud server, the CIRs obtained by measuring the PRSs by the multiple terminal devices. For ease of description, the CIR obtained by measuring the PRS is referred to as a measured CIR for short below. The LMF may perform, by using an augmentation algorithm, augmentation on the CIRs measured by the multiple terminal devices, to obtain augmented CIRs. It may be understood that this step corresponds to the application framework shown in FIG. 9. The CIRs measured by the multiple terminal devices and obtained by the LMF in this step are an example in which the LMF obtains the downlink channel responses measured by the multiple terminal devices in FIG. 9.

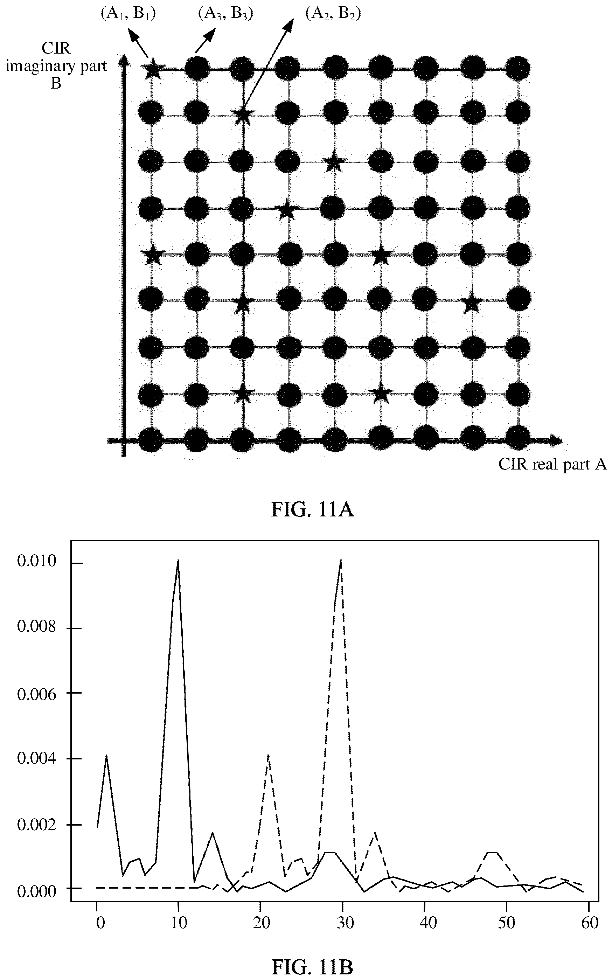

In a possible implementation, the LMF may perform augmentation on the measured CIRs by using an interpolation algorithm. The measured CIR includes a complex number array formed by a group of complex numbers, and a quantity of complex numbers in the complex number array may be understood as a quantity of sampling points of the measured CIR. The measured CIR includes a real part and an imaginary part. The LMF may perform linear interpolation on the real part and the imaginary part of the measured CIR to obtain an augmented CIR. The augmented CIR also includes a real part and an imaginary part. As shown in FIG. 11A, a horizontal coordinate represents a real part A, and a vertical coordinate represents an imaginary part B. The complex number in the measured CIR is represented by a black pentagram, and the complex number in the augmented CIR is represented by a black circle. For example, the complex number $(A_3, B_3)$ in the augmented CIR in FIG. 11A may be determined based on the complex numbers $(A_1, B_1)$ and $(A_2, B_2)$ in the measured CIR, for example, $(A_3, B_3) = (\frac{A_1+A_2}{2}, B_1)$.

In another possible implementation, the LMF may perform augmentation on the measured CIRs by using a translation algorithm. The measured CIR includes a complex number array formed by a group of complex numbers, and a quantity of complex numbers in the complex number array may be understood as a quantity of sampling points of the measured CIR. As shown in FIG. 11B, a horizontal coordinate represents a sampling point in time domain, and a vertical coordinate represents a signal power of a delay path of a corresponding channel. A curve drawn by using a solid line represents the measured CIR, and the curve drawn by using the solid line is translated rightwards by 20 sampling points in a sampling point dimension, to obtain a curve drawn by using a dashed line. The curve drawn by using the dashed line represents the augmented CIR. It may be understood that the CIR is divided into amplitude domain information and phase domain information, and performing augmentation on the measured CIR by using the translation algorithm is actually translating the amplitude domain information of the measured CIR.

In the downlink positioning scenario shown in FIG. 8B, the LMF may further obtain, based on historical positioning, location information of multiple terminal devices that provide measured CIRs. Alternatively, when obtaining the foregoing measured CIRs, the LMF obtains CIRs measured by multiple terminal devices whose location information is known. The LMF uses the location information of the multiple terminal devices as first output label data of an AI model used for positioning, and performs augmentation on the location information of the multiple terminal devices by using an augmentation algorithm, to obtain augmented location information, that is, second output label data of the AI model used for positioning.

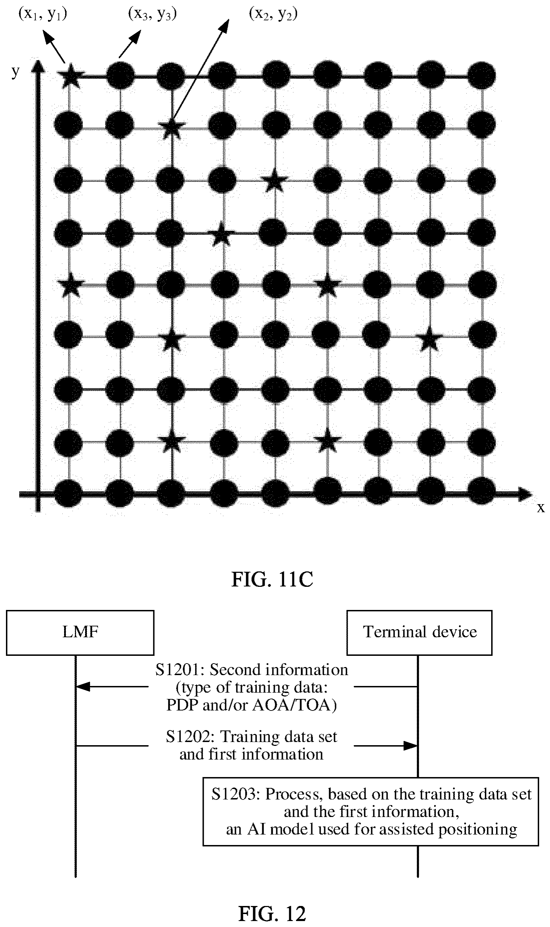

Optionally, the LMF may perform augmentation on the location information of the multiple terminal devices by using an interpolation algorithm. As shown in FIG. 11A, the location information of the terminal device is represented as two-dimensional coordinates, which are indicated by a horizontal coordinate x and a vertical coordinate y. The location information of the multiple terminal devices obtained by the LMF is represented by a black pentagram. The augmented location information is represented by a black circle. For example, the augmented location information $(x_3, y_3)$ in FIG. 11C may be determined based on the location information $(x_1, y_1)$ and $(x_2, y_2)$ of the terminal devices obtained by the LMF, for example, $(x_3, y_3) = (\frac{x_1 + x_2}{2}, y_1)$.

Optionally, corresponding to S1001, the training data set constructed by the access network device meets the type of the training data, the amount of the training data, and/or the quality indicator information of the training data that are/is required in the second information.

For example, in the first information, 0/1 is used to distinguish between first-type training data and second-type training data in the training data set. If identification information corresponding to the measured CIR or the location information of the terminal device in the training data set is 0, it may indicate that the measured CIR or the location information of the terminal device belongs to the first-type training data; or if identification information corresponding to the augmented CIR or the augmented location information in the training data set is 1, it may indicate that the augmented CIR or the augmented location information belongs to the second-type training data.

Optionally, if the training data in the training data set is grouped into N1 batches by batch, the first information may include identification information corresponding to each batch in the N1 batches. For example, when identification information corresponding to a batch is 0, it indicates that training data in the batch belongs to the measured CIR or the location information of the terminal device obtained by the LMF; or when identification information corresponding to a batch is 1, it indicates that training data in the batch belongs to the augmented CIR or the augmented location information.

S1003: The first terminal device processes, based on the training data set and the first information, an AI model deployed in the first terminal device. For example, in the downlink positioning scenario shown in FIG. 8B, the AI model deployed on the first terminal device side is used for positioning. In a possible implementation, the processing performed by the first terminal device on the AI model used for positioning is initial training or retraining on the AI model, and the first terminal device may perform initial training or retraining on the AI model based on the measured CIR and the augmented CIR that are included in the training data set. Corresponding to S1002, it may be understood that the measured CIRs in the training data set are from the multiple terminal devices. In this design, the AI model used for positioning can be jointly trained based on the CIRs of the multiple terminal devices, and a model generalization capability can be improved.

In another possible implementation, the processing performed by the first terminal device on the AI model used for positioning is update on the AI model, and mainly involves update on some key layers in the AI model. The first terminal device may select, based on the identification information corresponding to each batch in the first information, a batch whose identification information is 0, that is, a batch that belongs to the first-type training data in the training data set, so that the first terminal device can update the AI model by using the selected batch.

Optionally, the LMF described in FIG. 10 may be replaced with an access network device such as a gNB. In other words, the access network device may replace the LMF to perform the steps or solutions performed by the LMF in the foregoing steps S1001 to S1003. The method described in FIG. 10 may be applied to positioning of a terminal device, or may be applied to positioning of another device such as a positioning reference unit (positioning reference unit, PRU). This is not limited in this disclosure. When the foregoing method is applied to positioning of the PRU, it is equivalent to that the terminal device in FIG. 10 is replaced with the PRU, or the PRU may replace the terminal device, and the PRU performs the method implemented on the terminal device side in FIG. 10. Details are not described in this disclosure.

In addition, similar to the foregoing downlink positioning scenario, there is currently another downlink AI-line-of-sight (line of sight, LOS) identification assisted positioning scenario. In the downlink AI-LOS identification assisted positioning scenario, an AI model used for assisted positioning may be deployed in a terminal device. Input data of the AI model includes a power delay profile PDP obtained by the terminal device by measuring a PRS. Output data of the AI model includes an angle of arrival AOA and/or a time of arrival TOA when a downlink signal arrives at the terminal device. The AOA and/or the TOA may be used to assist in positioning the terminal device.

Refer to FIG. 12. The communication method provided in this disclosure is applied to the downlink AI-LOS identification assisted positioning scenario. Processing of the AI model used for assisted positioning may be implemented in the following steps S1201 to S1203.

S1201: A terminal device sends second information to an LMF, where the second information is used to request training data.

Optionally, the second information may include one or more of the following: a type of the training data, an amount of the training data, data quality indicator information corresponding to the training data, or a function of a to-be-processed model. In the method shown in FIG. 12, the type of the training data includes a type of input data and/or a type of output label data of the model. The type of the input data may be a PDP, and the type of the output label data may be an AOA or a TOA.

For example, the data quality indicator information corresponding to the PDP includes one or more of the following: a quantity of paths, in the PDP, whose power is greater than k times a first-path power, an average power of multiple sampling points, an LOS probability, a parameter that reflects an NLOS degree of a channel, an RSRP, or a moving speed of the terminal device. The data quality indicator information corresponding to the AOA or the TOA includes one or more of the following: an LOS probability, an inter-site synchronization error, or a measurement result confidence. In addition, optionally, the LMF may be replaced with an access network device, that is, the terminal device may send the second information to the access network device.

S1202: The LMF sends a training data set and first information to the terminal device.

The LMF may obtain, from multiple terminal devices, PDPs obtained by measuring PRSs, or in a scenario in which terminal devices upload PDPs obtained by measuring PRSs to a cloud server, the LMF may obtain, from the cloud server, the PDPs obtained by measuring the PRSs by the multiple terminal devices. For ease of description, the PDP obtained by measuring the PRS is referred to as a measured PDP for short below. The LMF may perform, by using an augmentation algorithm, augmentation on the PDPs measured by the multiple terminal devices, to obtain augmented PDPs.

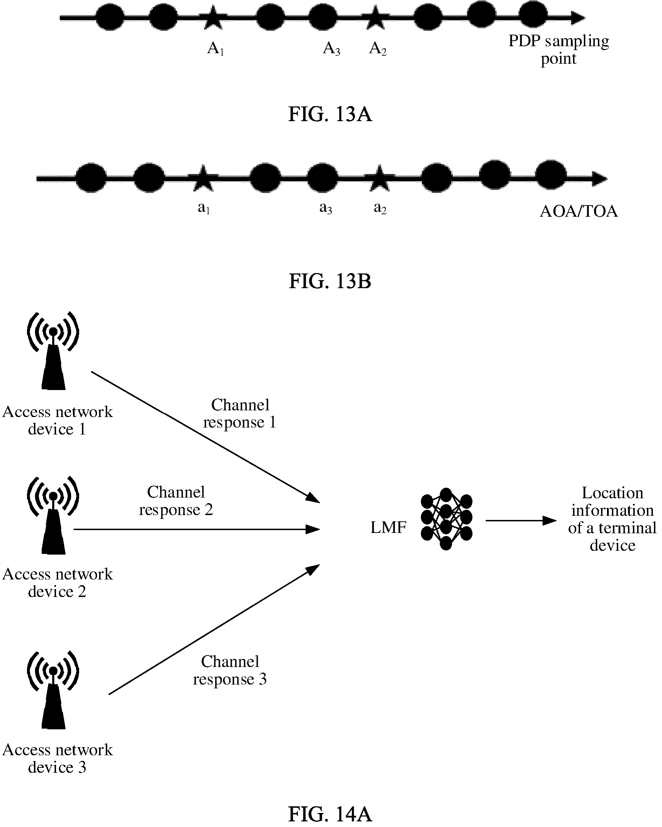

In a possible implementation, the LMF may perform augmentation on the measured PDPs by using an interpolation algorithm. The measured PDP includes a real number array formed by a group of real numbers, and a quantity of real numbers in the real number array may be understood as a quantity of sampling points of the measured PDP. The LMF may perform linear interpolation on the measured PDP to obtain the augmented PDP. For example, as shown in FIG. 13A, the real number in the measured PDP is represented by a black pentagram, and the real number in the augmented PDP is represented by a black circle. For example, the real number $A_3$ in the augmented PDP in FIG. 13A may be determined based on the real numbers $A_1$ and $A_2$ in the measured PDP, for example, $A_3 = A_1 + \dfrac{A_2 - A_1}{3}$.

In another possible implementation, the LMF may perform augmentation on the measured PDPs by using a translation algorithm, to obtain the augmented PDPs. It may be understood that the PDP corresponds to an amplitude domain of a CIR, and performing augmentation on the measured PDP by using the translation algorithm is equivalent to performing augmentation on a measured CIR by using the translation algorithm. Therefore, for a manner of performing augmentation on the measured PDP by using the translation algorithm, refer to FIG. 11B. Details are not described in this disclosure.

Similarly, the LMF may further obtain, based on historical positioning, AOAs/TOAs corresponding to multiple terminal devices that provide measured PDPs. Alternatively, some AOAs/TOAs may be manually calibrated for communication between multiple terminal devices that provide measured PDPs and an access network device. In this case, the LMF may obtain, based on the manual calibration, the AOAs/TOAs corresponding to the multiple terminal devices. The LMF uses the AOAs/TOAs corresponding to the multiple terminal devices as first output label data of an AI model used for positioning, and performs augmentation on the AOAs/TOAs corresponding to the multiple terminal devices by using an augmentation algorithm, to obtain augmented AOAs/TOAs, that is, second output label data of the AI model used for positioning.

Optionally, the LMF may perform augmentation on the AOAs/TOAs corresponding to the multiple terminal devices by using an interpolation algorithm. The AOAs/TOAs corresponding to the multiple terminal devices are represented as real numbers. The LMF may perform linear interpolation on the AOAs/TOAs corresponding to the multiple terminal devices to obtain augmented AOAs/TOAs. For example, as shown in FIG. 13B, the AOAs/TOAs corresponding to the multiple terminal devices and obtained by the LMF are shown by black pentagrams, and the augmented AOAs/TOAs are shown by black circles. For example, the real number $A_3$ in the augmented AOA/TOA in FIG. 13A may be determined based on the real numbers $A_1$ and $A_2$ in the AOA/TOA obtained by the LMF, for example, $A_3 = A_1 + \dfrac{A_2 - A_1}{3}$.

Optionally, corresponding to S1201, the training data set constructed by the access network device meets the type of the training data, the amount of the training data, and/or the quality indicator information of the training data that are/is required in the second information.

For example, in the first information, 0/1 is used to distinguish between first-type training data and second-type training data in the training data set. If identification information corresponding to the measured PDP or the AOA/TOA obtained by the LMF in the training data set is 0, it may indicate that the measured PDP or the AOA/TOA obtained by the LMF belongs to the first-type training data; or if identification information corresponding to the augmented PDP or the augmented AOA/TOA in the training data set is 1, it may indicate that the augmented PDP or the augmented AOA/TOA belongs to the second-type training data.

Optionally, if the training data in the training data set is grouped into N1 batches by batch, the first information may include identification information corresponding to each batch in the N1 batches. For example, when identification information corresponding to a batch is 0, it indicates that training data in the batch belongs to the measured PDP or the AOA/TOA obtained by the LMF; or when identification information corresponding to a batch is 1, it indicates that training data in the batch belongs to the augmented PDP or the augmented AOA/TOA.

S1203: The terminal device processes, based on the training data set and the first information, an AI model used for assisted positioning.

For example, the processing on the AI model used for assisted positioning is initial training or retraining on the AI model, and the terminal device may perform initial training or retraining on the AI model based on the measured PDP and the augmented PDP that are included in the training data set. Corresponding to S1202, it may be understood that the measured PDPs in the training data set are from the multiple terminal devices. In this design, the AI model used for assisted positioning can be jointly trained based on the PDPs of the multiple terminal devices, and a model generalization capability can be improved.

For another example, the processing on the AI model used for assisted positioning is update on the AI model, and mainly involves update on some key layers in the AI model. The terminal device may select, based on the identification information corresponding to each batch in the first information, a batch whose identification information is 0, that is, a batch that belongs to the first-type training data in the training data set, so that the terminal device can update the AI model by using the selected batch.

Optionally, the method described in FIG. 12 may be applied to positioning of a terminal device, or may be applied to positioning of another device such as a PRU. This is not limited in this disclosure. When the foregoing method is applied to positioning of the PRU, it is equivalent to that the terminal device in FIG. 12 is replaced with the PRU, or the PRU may replace the terminal device, and the PRU performs the method implemented on the terminal device side in FIG. 12. Details are not described in this disclosure. In addition, it may be understood that the LMF in FIG. 12 may be replaced with an access network device, or the access network device may replace the LMF, and the access network device performs the method implemented on the LMF side in FIG. 12. Details are not described in this disclosure.

(2) AI is introduced to a terminal positioning scenario to enhance positioning accuracy. An AI model used for positioning is designed. Input data of the AI model includes a channel response or a characteristic of the channel response, and output data of the AI model includes location information of a terminal device. The terminal positioning scenario includes an uplink positioning scenario and a downlink positioning scenario.

In the uplink positioning scenario, the terminal device may send a sounding reference signal (sounding reference signal, SRS) to an access network device or a cell node of the access network device, and the access network device or the cell of the access network device measures the SRS to obtain an uplink channel response. In this way, the access network device or the cell node of the access network device may report the obtained uplink channel response to a location management function (location management function, LMF) network element. The LMF network element may also be referred to as an LMF for short. Alternatively, the access network device or the cell node of the access network device may extract a characteristic from the obtained uplink channel response based on the AI model, and report the characteristic based on the uplink channel response to the LMF. Further, the LMF may determine the location of the terminal device based on the AI model used for positioning and the obtained uplink channel response or the characteristic based on the uplink channel response.

For example, FIG. 14A shows an AI-based uplink positioning scenario. An AI model may be deployed on an LMF side. Multiple access network devices, namely, an access network device 1, an access network device 2, and an access network device 3, respectively send channel responses (that is, uplink channel responses) to the LMF. The LMF uses the channel responses of the multiple access network devices as an input of the AI model, and outputs location information of a terminal device. Assuming that a quantity of antennas of the access network device is 16, and a quantity of subcarriers is 4096, the channel response sent by each access network device to the LMF includes information about 16*4096 complex numbers.

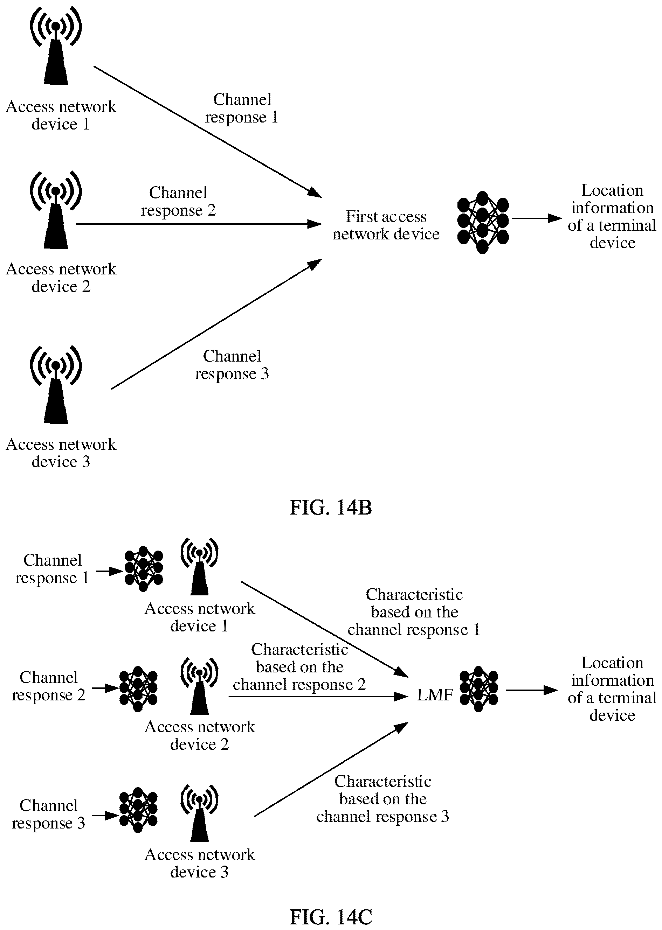

For example, FIG. 14B shows an AI-based uplink positioning scenario. An AI model may be deployed on a first access network device side, and the first access network device performs terminal device positioning. Multiple access network devices, namely, an access network device 1, an access network device 2, and an access network device 3, respectively send channel responses (that is, uplink channel responses) to the first access network device. The first access network device uses the channel responses of the multiple access network devices as an input of the AI model, and outputs location information of a terminal device. It may be understood that one of the multiple access network devices that send the uplink channel response may be used as a device for deploying the AI model. For example, the first access network device may be one of the access network device 1, the access network device 2, and the access network device 3. Alternatively, an access network device for deploying the AI model is different from the access network device that sends the uplink channel response. It may be understood that, different from the method shown in FIG. 14A in which the LMF outputs the location information of the terminal device, in the method shown in FIG. 14B, one access network device (for example, the first access network device) outputs location information of a terminal device.

For example, FIG. 14B shows another AI-based uplink positioning scenario. An AI model may be deployed on an access network device side and an LMF side. Each of multiple access network devices uses an obtained channel response as an input of the AI model based on the AI model, and outputs a characteristic based on the channel response, which is briefly referred to as a channel characteristic. Further, each of the multiple access network devices sends the channel characteristic to the LMF. A dimension of the channel characteristic is determined by an output dimension of the AI model on the access network device side. For example, the access network device side may extract a channel characteristic whose dimension is [128] from a channel response whose dimension is [16, 4096], and send the channel characteristic to the LMF. The LMF uses channel characteristics of the multiple access network devices as an input of the AI model used for positioning based on the AI model used for positioning that is deployed on the LMF, and outputs location information of the terminal device. Assuming that a quantity of antennas of the access network device is 16, and a quantity of subcarriers is 4096, the channel response sent by each access network device to the LMF includes information about 16*4096 complex numbers. It may be understood that, in the method shown in FIG. 14B, the LMF outputs the location of the terminal device. However, different from the method shown in FIG. 14A in which the input information of the AI model in the LMF is the channel responses, in FIG. 14B, the input information of the AI model in the LMF is the characteristics of the channel responses obtained by the terminal device.

The foregoing uplink channel response may be a channel impulse response CIR, a power delay profile PDP, a channel frequency response CFR, or an angle of arrival AOA corresponding to the access network device and/or a time of arrival TOA corresponding to the access network device.

The following uses an example in which an AI model is deployed on a terminal device side in an uplink positioning scenario to describe in detail a manner in which the foregoing communication method is applied to processing of the AI model on the terminal device side.

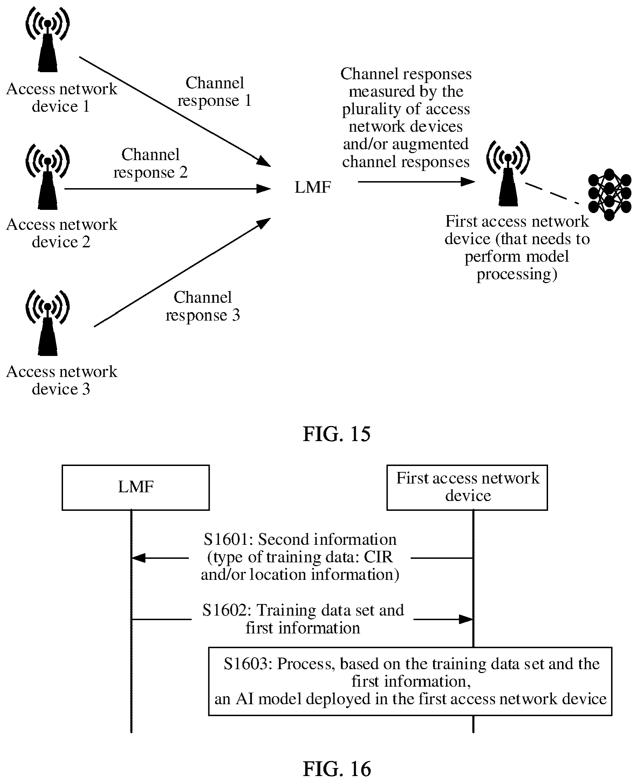

FIG. 15 shows an application framework of model processing in an uplink positioning scenario. An LMF receives uplink channel responses measured by multiple access network devices (for example, gNBs), namely, a channel response 1, a channel response 2, and a channel response 3. It may be understood that, as shown in FIG. 14A, the access network devices may obtain the uplink channel responses through measurement based on SRSs sent by a terminal device, and the multiple access network devices may send the uplink channel responses obtained through measurement to the LMF.

After performing augmentation on the uplink channel responses of the multiple access network devices, the LMF may send, to a first access network device that needs to perform model processing, the uplink channel responses measured by the multiple access network devices and/or the augmented uplink channel responses. In this way, the first access network device may process, by using the uplink channel responses measured by the multiple access network devices and/or the augmented uplink channel responses, an AI model deployed in the first access network device shown in FIG. 14B or FIG. 14C.

For ease of implementation, FIG. 16 shows a communication method, involving interaction between a first access network device and an LMF. The first access network device is an example of the foregoing second device, and the LMF is an example of the foregoing first device. An AI model deployed in the first access network device may be processed. The method includes the following steps.

S1601: The first access network device sends second information to the LMF, where the second information is used to request training data.

Optionally, the second information may include one or more of the following: a type of the training data, an amount of the training data, or data quality indicator information corresponding to the training data.

This step may be understood with reference to the description and the example in S1001. Details are not described in this disclosure.

S1602: The LMF sends a training data set and first information to the first access network device.

The LMF may receive CIRs that are obtained by measuring SRSs and that are sent by multiple access network devices. For ease of description, the CIR obtained by measuring the SRS is referred to as a measured CIR for short below. The LMF may perform, by using an augmentation algorithm, augmentation on the CIRs measured by the multiple access network devices, to obtain augmented CIRs. It may be understood that this step corresponds to the application framework shown in FIG. 15. The CIRs measured by the multiple access network devices and obtained by the LMF in this step are an example in which the LMF obtains the uplink channel responses measured by the multiple access network devices in FIG. 9.

For an augmentation manner of the CIRs, refer to the description in S1002 for understanding. Details are not described in this disclosure.

In the uplink positioning scenario shown in FIG. 14B, the LMF may further obtain, based on historical positioning, location information of multiple terminal devices that send SRSs. Alternatively, the access network device may send, to the LMF, CIRs measured based on SRSs sent by terminal devices whose locations are known, and send the known locations of these terminal devices to the LMF. The LMF uses the location information of the multiple terminal devices as first output label data of an AI model used for positioning, and performs augmentation on the location information of the multiple terminal devices by using an augmentation algorithm, to obtain augmented location information, that is, second output label data of the AI model used for positioning. For a manner in which the LMF performs augmentation on the location information of the terminal devices, refer to the description in S1002 for understanding. Details are not described in this disclosure.

S1603: The first access network device processes, based on the training data set and the first information, an AI model deployed in the first access network device. This step may be understood with reference to the description in S 1003. Details are not described in this disclosure.

The method described in FIG. 16 may be applied to positioning of a terminal device, or may be applied to positioning of another device such as a positioning reference unit PRU. This is not limited in this disclosure.

In addition, a manner of performing model processing by using first-type training data and/or second-type training data in this disclosure may be further applied to another communication scenario involving AI model processing, for example, an AI-based beam scanning and management scenario. This is not limited in this disclosure.

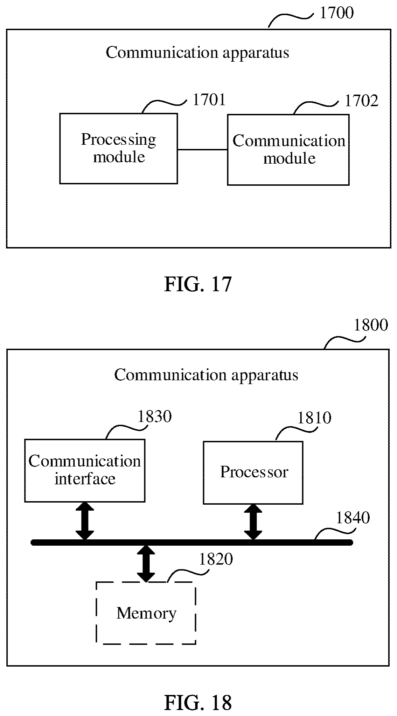

Based on a same concept, refer to FIG. 17. This disclosure provides a communication apparatus 1700. The communication apparatus 1700 includes a processing module 1701 and a communication module 1702. The communication apparatus 1700 may be a second device, or may be a communication apparatus that is used in the second device or used in cooperation with the second device and that can implement a communication method performed on the second device side. Alternatively, the communication apparatus 1700 may be a first device, or may be a communication apparatus that is used in the first device or used in cooperation with the first device and that can implement a communication method performed on the first device side.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation on the second device side or the first device side in the foregoing methods. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 1700 is used in the second device, the processing module 1701 may be configured to implement a processing function of the second device in the foregoing method examples, and the communication module 1702 may be configured to implement receiving and sending functions of the second device in the foregoing method examples. Alternatively, the communication apparatus may be understood with reference to the descriptions and the possible designs in the third aspect or the fifth aspect in the summary.

When the communication apparatus 1700 is used in the first device, the processing module 1701 may be configured to implement a processing function of the first device in the foregoing method examples, and the communication module 1702 may be configured to implement receiving and sending functions of the first device in the foregoing method examples. Alternatively, the communication apparatus may be understood with reference to the descriptions and the possible designs in the fourth aspect or the sixth aspect in the summary.

In addition, it should be noted that the communication module and/or the processing module may be implemented by a virtual module. For example, the processing module may be implemented by a software functional unit or a virtual apparatus, and the communication module may be implemented by a software function or a virtual apparatus. Alternatively, the processing module or the communication module may be implemented by a physical apparatus. For example, if the communication apparatus is implemented by a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

Division into the modules in this disclosure is an example, and is merely division into logical functions. There may be another division manner during actual implementation. In addition, functional modules in examples of this disclosure may be integrated into one processor, each of the modules may exist alone physically, or two or more modules may be integrated into one module. The integrated module may be implemented in a form of hardware, or may be implemented in a form of a software functional module.

Based on a same technical concept, this disclosure further provides a communication apparatus 1800. For example, the communication apparatus 1800 may be a first device or a second device, or a chip or a chip system used in the first device or the second device. Optionally, in this disclosure, the chip system may include a chip, or may include a chip and another discrete component.

The communication apparatus 1800 may be configured to implement functions of any network element in the communication system described in the foregoing examples. The communication apparatus 1800 may include at least one processor 1810. Optionally, the processor 1810 is coupled to a memory. The memory may be located in the communication apparatus. Alternatively, the memory may be integrated with the processor. Alternatively, the memory may be located outside the apparatus. For example, the communication apparatus 1800 may further include at least one memory 1820. The memory 1820 stores a computer program, a computer program or instructions, and/or data that are/is necessary for implementing any one of the foregoing examples. The processor 1810 may execute the computer program stored in the memory 1820, to perform the method in any one of the foregoing examples.

The communication apparatus 1800 may further include a communication interface 1830, and the communication apparatus 1800 may exchange information with another device through the communication interface 1830. For example, the communication interface 1830 may be a transceiver, a circuit, a bus, a module, a pin, or a communication interface of another type. When the communication apparatus 1800 is a chip-type apparatus or circuit, the communication interface 1830 in the communication apparatus 1800 may alternatively be an input/output circuit, and may input information (or receive information) and output information (or send information). The processor is an integrated processor, a microprocessor, an integrated circuit, or a logic circuit. The processor may determine output information based on input information.

Couplings in this disclosure are indirect couplings or communication connections between apparatuses, units, or modules, and may be electrical, mechanical, or in another form, and are used for information exchange between the apparatuses, the units, or the modules. The processor 1810 may operate cooperatively with the memory 1820 and the communication interface 1830. A specific connection medium between the processor 1810, the memory 1820, and the communication interface 1830 is not limited in this disclosure.

Optionally, as shown in FIG. 18, the processor 1810, the memory 1820, and the communication interface 1830 are connected to each other through a bus 1840. The bus 1840 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 18, but this does not mean that there is only one bus or only one type of bus.

In this disclosure, the processor may be a general-purpose processor, a digital signal processor, an application-specific integrated circuit, a field programmable gate array or another programmable logic device, a discrete gate or a transistor logic device, or a discrete hardware component, and may implement or perform methods, steps, and logical block diagrams that are disclosed in this disclosure. The general-purpose processor may be a microprocessor or any conventional processor or the like. The steps of the methods disclosed with reference to this disclosure may be directly implemented by a hardware processor, or may be performed by a combination of hardware in the processor and a software module.

In this disclosure, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instructions or a data structure and that can be accessed by a computer, but is not limited thereto. The memory in this disclosure may alternatively be a circuit or any other apparatus that can implement a storage function, and is configured to store program instructions and/or data.

In a possible implementation, the communication apparatus 1800 may be used in a first device. Specifically, the communication apparatus 1800 may be the first device, or may be an apparatus that can support the first device in implementing a function of the first device in any one of the foregoing examples. The memory 1820 stores a computer program (or instructions) and/or data for implementing a function of the first device in any one of the foregoing examples. The processor 1810 may execute the computer program stored in the memory 1820, to complete the method performed by the first device in any one of the foregoing examples. When the communication apparatus 1800 is used in the first device, the communication interface in the communication apparatus 1800 may be configured to interact with a second device, and send information to the second device or receive information from the second device.

In another possible implementation, the communication apparatus 1800 may be used in a second device. Specifically, the communication apparatus 1800 may be the second device, or may be an apparatus that can support the second device in implementing a function of the second device in any one of the foregoing examples. The memory 1820 stores a computer program (or instructions) and/or data for implementing a function of the second device in any one of the foregoing examples. The processor 1810 may execute the computer program stored in the memory 1820, to complete the method performed by the second device in any one of the foregoing examples. When the communication apparatus 1800 is used in the second device, the communication interface in the communication apparatus 1800 may be configured to interact with a first device, and send information to the first device or receive information from the first device.

The communication apparatus 1800 provided in this example may be used in the first device to complete the method performed by the first device, or may be used in the second device to complete the method performed by the second device. Therefore, for technical effects that can be achieved by the communication apparatus 1800, refer to the foregoing method examples. Details are not described herein again.

Based on the foregoing examples, this disclosure provides a communication system, including a first device and a second device. The first device and the second device may implement the communication method provided in the foregoing examples.

All or some of the technical solutions provided in this disclosure may be implemented by software, hardware, firmware, or any combination thereof. When software is used to implement the technical solutions, all or a part of the technical solutions may be implemented in a form of a computer program product. The computer program product includes one or more computer instructions. When the computer program instructions are loaded and executed on a computer, the procedures or functions according to this disclosure are all or partially generated. The computer may be a general-purpose computer, a dedicated computer, a computer network, a second device, a first device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this disclosure, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

It is clear that a person skilled in the art can make various modifications and variations to this disclosure without departing from the scope of this disclosure. This disclosure is intended to cover these modifications and variations of this disclosure provided that they fall within the scope of the claims of this disclosure and their equivalent technologies.

## Claims

1. A communication method, comprising:
   receiving a training data set and first information, wherein the first information comprises identification information corresponding to one or more pieces of training data in the training data set, the identification information indicates that the corresponding training data belongs to first-type training data or second-type training data, and the second-type training data is obtained by processing the first-type training data based on an augmentation algorithm.

2. The method according to claim 1, wherein the training data set comprises N1 groups of training data, and the first information comprises N2 pieces of identification information, wherein N1 is greater than or equal to N2, and N1 and N2 are positive integers.

3. The method according to claim 2, wherein an $i^{th}$ part of groups of training data in the N1 groups of training data corresponds to an $i^{th}$ piece of identification information, wherein i is a positive integer from 1 to N2, and the $i^{th}$ piece of identification information indicates that all training data in the $i^{th}$ part of groups of training data belongs to the first-type training data or the second-type training data; and the $i^{th}$ part of groups of training data comprises an $i^{th}$ group of training data in the N1 groups of training data, or the $i^{th}$ part of groups of training data comprises multiple consecutive groups of training data in the N1 groups of training data.

4. The method according to claim 2 or 3, wherein content indicated by the $i^{th}$ piece of identification information is different from content indicated by $(i+1)^{th}$ piece of identification information.

5. The method according to any one of claims 1 to 4, further comprising:
   sending second information, wherein the second information is used to request training data.

6. The method according to claim 5, wherein the second information comprises one or more of the following:

   a type of the training data;
   an amount of the training data; or
   data quality indicator information corresponding to the training data.

7. The method according to any one of claims 1 to 6, further comprising:

   receiving third information, wherein the third information indicates specified training data in the training data set, and the specified training data comprises all or part of data in the training data set; and
   processing a model based on the specified training data.

8. The method according to claim 7, wherein the third information comprises a group identifier corresponding to the specified training data, or the third information comprises indication information of a processing task of the model, and there is a mapping relationship between the processing task and the specified training data.

9. The method according to any one of claims 1 to 6, further comprising:

when a processing task of a model corresponds to a first value, processing the model based on all or part of data in the first-type training data; or
when a processing task of the model corresponds to a second value, processing the model based on all or part of data in the first-type training data and all or part of data in the second-type training data; or
when a processing task of the model corresponds to a third value, processing the model based on all or part of data in the second-type training data.

10. The method according to any one of claims 1 to 9, wherein the first-type training data comprises first input data and/or first output label data of the model, and the second-type training data comprises second input data obtained by processing the first input data based on the augmentation algorithm and/or second output label data obtained by processing the first output label data based on the augmentation algorithm.

11. The method according to claim 10, wherein a type of the first-type training data comprises a type of the first input data and/or a type of the first output label data, wherein

the type of the first input data is a channel impulse response, and the type of the first output label data is position information; or
the type of the first input data is a power delay profile, and the type of the first output label data is angle of arrival information or time of arrival information; or
the type of the first input data is channel state information, and the type of the first output label data is compressed information of the channel state information.

12. A communication method, comprising:
sending a training data set and first information, wherein the first information comprises identification information corresponding to one or more pieces of training data in the training data set, the identification information indicates that the corresponding training data belongs to first-type training data or second-type training data, and the second-type training data is obtained by processing the first-type training data based on an augmentation algorithm.

13. The method according to claim 12, wherein the training data set comprises N1 groups of training data, and the first information comprises N2 pieces of identification information, wherein N1 is greater than or equal to N2, and N1 and N2 are positive integers.

14. The method according to claim 13, wherein an $i^{th}$ part of groups of training data in the N1 groups of training data corresponds to an $i^{th}$ piece of identification information, wherein i is a positive integer from 1 to N2, and the $i^{th}$ piece of identification information indicates that all training data in the $i^{th}$ part of groups of training data belongs to the first-type training data or the second-type training data; and the $i^{th}$ part of groups of training data comprises an $i^{th}$ group of training data in the N1 groups of training data, or the $i^{th}$ part of groups of training data comprises multiple consecutive groups of training data in the N1 groups of training data.

15. The method according to claim 13 or 14, wherein content indicated by the $i^{th}$ piece of identification information is different from content indicated by the $(i+1)^{th}$ piece of identification information.

16. The method according to any one of claims 12 to 15, further comprising:
receiving second information, wherein the second information is used to request training data.

17. The method according to claim 16, wherein the second information comprises one or more of the following:

a type of the training data;
an amount of the training data; or
data quality indicator information corresponding to the training data.

18. The method according to any one of claims 12 to 17, further comprising:
sending third information, wherein the third information indicates specified training data in the training data set, and the specified training data comprises all or part of data in the training data set, wherein the specified training data is used to process a model.

19. The method according to claim 18, wherein the third information comprises a group identifier corresponding to the specified training data, or the third information comprises indication information of a processing task of the model, and there is a mapping relationship between the processing task and the specified training data.

20. The method according to any one of claims 12 to 19, wherein the first-type training data comprises first input data and/or first output label data of the model, and the second-type training data comprises second input data obtained by processing the first input data based on the augmentation algorithm and/or second output label data obtained by processing the first output label data based on the augmentation algorithm.

21. The method according to claim 20, wherein a type of the first-type training data comprises a type of the first input data and/or a type of the first output label data, wherein

the type of the first input data is a channel impulse response, and the type of the first output label data is position information; or
the type of the first input data is a power delay profile, and the type of the first output label data is angle of arrival information or time of arrival information; or
the type of the first input data is channel state information, and the type of the first output label data is compressed information of the channel state information.

22. A communication apparatus, comprising:

a communication module, configured to receive a training data set and first information, wherein the first information comprises identification information corresponding to one or more pieces of training data in the training data set, the identification information indicates that the corresponding training data belongs to first-type training data or second-type training data, and the second-type training data is obtained by processing the first-type training data based on an augmentation algorithm; and
a processing module, configured to process a model based on the training data set and the first information.

23. The apparatus according to claim 22, wherein the training data set comprises N1 groups of training data, and the first information comprises N2 pieces of identification information, wherein N1 is greater than or equal to N2, and N1 and N2 are positive integers.

24. The apparatus according to claim 23, wherein an $i^{th}$ part of groups of training data in the N1 groups of training data corresponds to an $i^{th}$ piece of identification information, wherein i is a positive integer from 1 to N2, and the $i^{th}$ piece of identification information indicates that all training data in the $i^{th}$ part of groups of training data belongs to the first-type training data or the second-type training data; and the $i^{th}$ part of groups of training data comprises an $i^{th}$ group of training data in the N1 groups of training data, or the $i^{th}$ part of groups of training data comprises multiple consecutive groups of training data in the N1 groups of training data.

25. The apparatus according to claim 23 or 24, wherein content indicated by the $i^{th}$ piece of identification information is different from content indicated by the $(i+1)^{th}$ piece of identification information.

26. The apparatus according to any one of claims 22 to 25, wherein the communication module is further configured to: send second information, wherein the second information is used to request training data.

27. The apparatus according to claim 26, wherein the second information comprises one or more of the following:

a type of the training data;
an amount of the training data; or
data quality indicator information corresponding to the training data.

28. The apparatus according to any one of claims 22 to 27, wherein the communication module is further configured to:

receive third information, wherein the third information indicates specified training data in the training data set, and the specified training data comprises all or part of data in the training data set; and
process the model based on the specified training data.

29. The apparatus according to claim 28, wherein the third information comprises a group identifier corresponding to the specified training data, or the third information comprises indication information of a processing task of the model, and there is a mapping relationship between the processing task and the specified training data.

30. The apparatus according to any one of claims 22 to 27, wherein the processing module is further configured to:

when a processing task of the model corresponds to a first value, process the model based on all or part of data in the first-type training data; or
when a processing task of the model corresponds to a second value, process the model based on all or part of data in the first-type training data and all or part of data in the second-type training data; or
when a processing task of the model corresponds to a third value, process the model based on all or part of data in the second-type training data.

31. The apparatus according to any one of claims 22 to 30, wherein the first-type training data comprises first input data and/or first output label data of the model, and the second-type training data comprises second input data obtained by processing the first input data based on the augmentation algorithm and/or second output label data obtained by processing the first output label data based on the augmentation algorithm.

32. The apparatus according to claim 31, wherein a type of the first-type training data comprises a type of the first input data and/or a type of the first output label data, wherein

the type of the first input data is a channel impulse response, and the type of the first output label data is position information; or
the type of the first input data is a power delay profile, and the type of the first output label data is angle of arrival information or time of arrival information; or
the type of the first input data is channel state information, and the type of the first output label data is compressed information of the channel state information.

33. A communication apparatus, comprising:

a processing module, configured to determine a training data set and first information; and
a communication module, configured to send the training data set and the first information, wherein the training data set and the first information are used to process a model, wherein
the first information comprises identification information corresponding to one or more pieces of training data in the training data set, the identification information indicates that the corresponding training data belongs to first-type training data or second-type training data, and the second-type training data is obtained by processing the first-type training data based on an augmentation algorithm.

34. The apparatus according to claim 33, wherein the training data set comprises N1 groups of training data, and the first information comprises N2 pieces of identification information, wherein N1 is greater than or equal to N2, and N1 and N2 are positive integers.

35. The apparatus according to claim 34, wherein an $i^{th}$ part of groups of training data in the N1 groups of training data corresponds to an $i^{th}$ piece of identification information, wherein i is a positive integer from 1 to N2, and the $i^{th}$ piece of identification information indicates that all training data in the $i^{th}$ part of groups of training data belongs to the first-type training data or the second-type training data; and the $i^{th}$ part of groups of training data comprises an $i^{th}$ group of training data in the N1 groups of training data, or the $i^{th}$ part of groups of training data comprises multiple consecutive groups of training data in the N1 groups of training data.

36. The apparatus according to claim 34 or 35, wherein content indicated by the $i^{th}$ piece of identification information is different from content indicated by the $(i+1)^{th}$ piece of identification information.

37. The apparatus according to any one of claims 33 to 36, wherein the communication module is further configured to: receive second information, wherein the second information is used to request training data.

38. The apparatus according to claim 37, wherein the second information comprises one or more of the following:

a type of the training data;

an amount of the training data; or

data quality indicator information corresponding to the training data.

39. The apparatus according to any one of claims 33 to 38, wherein the communication module is further configured to: send third information, wherein the third information indicates specified training data in the training data set, and the specified training data comprises all or part of data in the training data set, wherein the specified training data is used to process the model.

40. The apparatus according to claim 39, wherein the third information comprises a group identifier corresponding to the specified training data, or the third information comprises indication information of a processing task of the model, and there is a mapping relationship between the processing task and the specified training data.

41. The apparatus according to any one of claims 33 to 40, wherein the first-type training data comprises first input data and/or first output label data of the model, and the second-type training data comprises second input data obtained by processing the first input data based on the augmentation algorithm and/or second output label data obtained by processing the first output label data based on the augmentation algorithm.

42. The apparatus according to claim 41, wherein a type of the first-type training data comprises a type of the first input data and/or a type of the first output label data, wherein

the type of the first input data is a channel impulse response, and the type of the first output label data is position information; or

the type of the first input data is a power delay profile, and the type of the first output label data is angle of arrival information or time of arrival information; or

the type of the first input data is channel state information, and the type of the first output label data is compressed information of the channel state information.

43. A communication apparatus, comprising a processor, wherein the processor is coupled to a memory, and the processor is configured to invoke computer program instructions stored in the memory, to perform the method according to any one of claims 1 to 11 or the method according to any one of claims 12 to 21.

44. A computer-readable storage medium, wherein the computer-readable storage medium stores instructions, and when the instructions are run on a computer, the computer is caused to perform the method according to any one of claims 1 to 11 or the method according to any one of claims 12 to 21.

FIG. 1

FIG. 2A

FIG. 2B

FIG. 2C

FIG. 2D

FIG. 3

FIG. 4

FIG. 5

FIG. 6

FIG. 7

Access network
device 1

PRS

Access network
device 2

PRS

Terminal
device

Channel response 1,
channel response 2, and
channel response 3

LMF

Location
information
of the
terminal
device

PRS

Access network
device 3

FIG. 8A

Access network
device 1

PRS

Access network
device 2

PRS

PRS

Access network
device 3

Terminal
device

Channel response 1,
channel response 2, and
channel response 3

Location
information
of the
terminal
device

FIG. 8B

Access network
device 1

PRS

Access network
device 2

PRS

PRS

Access network
device 3

Terminal
device

Channel
response 1,
channel response
2, and channel
response 3

Characteristic based on the
channel response 1,
characteristic based on the
channel response 2, and
characteristic based on the
channel response 3

LMF

Location
information of
the terminal
device

FIG. 8C

Terminal
device 1

Channel response 1

Channel
response 2

Terminal
device 2

Channel response 3

Terminal
device 3

LMF/gNB

Channel responses
measured by the
plurality of terminal
devices and/or
augmented channel
responses

First terminal device
(that needs to perform
model processing)

**FIG. 9**

| LMF | | First terminal device |
|---|---|---|

S1001: Second information
(type of training data: CIR and/or
location information)

S1002: Training data set and
first information

S1003: Process, based on the training data set
and the first information,
an AI model deployed in the first terminal device

**FIG. 10**

FIG. 11A

FIG. 11B

$(x_1, y_1)$   $(x_3, y_3)$   $(x_2, y_2)$

**FIG. 11C**

```
┌──────────────┐                              ┌──────────────────┐
│     LMF      │                              │ Terminal device  │
└──────────────┘                              └──────────────────┘
```

S1201: Second information
(type of training data:
PDP and/or AOA/TOA)

S1202: Training data set
and first information

S1203: Process, based on the training data set
and the first information,
an AI model used for assisted positioning

**FIG. 12**

FIG. 13A

FIG. 13B

FIG. 14A

FIG. 14B

FIG. 14C

EP 4 661 464 A1

FIG. 15

FIG. 16

43

1700

Communication apparatus

1701

Processing module

1702

Communication module

**FIG. 17**

1800

Communication apparatus

1830

Communication interface

1810

Processor

1840

1820

Memory

**FIG. 18**

## INTERNATIONAL SEARCH REPORT

| International application No. |
|---|
| **PCT/CN2024/074743** |

**A. CLASSIFICATION OF SUBJECT MATTER**

H04W16/22(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNKI, CNTXT, ENTXTC, ENTXT, 3GPP: 标签, 标识, 标志, 第一, 第二, 训练数据, 类, 集, 组, 模型, 机器学习, 接收, 强化, 算法, 增强, 位置, 信道脉冲, 到达角度, 信道状态信息, label, id, identifier, first, second, training data, type, set, group, AI, ML, receive, enhancement, position, pulse, AOA, CSI

**C. DOCUMENTS CONSIDERED TO BE RELEVANT**

| Category* | Citation of document, with indication, where appropriate, of the relevant passages | Relevant to claim No. |
|---|---|---|
| X | CN 114999532 A (BEIJING BAIDU NETCOM SCIENCE AND TECHNOLOGY CO., LTD.) 02 September 2022 (2022-09-02) description, paragraphs [0042]-[0138] | 1-8, 10, 12-20, 22-29, 31, 33-41, 43, 44 |
| A | CN 112465147 A (ROBERT BOSCH CO., LTD.) 09 March 2021 (2021-03-09) entire document | 1-44 |
| A | CN 112884158 A (HANGZHOU HIKVISION DIGITAL TECHNOLOGY CO., LTD.) 01 June 2021 (2021-06-01) entire document | 1-44 |
| A | US 2021303928 A1 (ALIBABA GROUP HOLDING LIMITED) 30 September 2021 (2021-09-30) entire document | 1-44 |
| A | VIVO. "Evaluation on AI/ML for beam management" *3GPP tsg_ran\wg1_rl1, R1-2203552*, 30 April 2022 (2022-04-30), entire document | 1-44 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 April 2024** | **25 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/074743** |

| Patent document cited in search report | | | Publication date (day/month/year) | Patent family member(s) | | | Publication date (day/month/year) |
| --- | --- | --- | --- | --- | --- | --- | --- |
| CN | 114999532 | A | 02 September 2022 | None | | | |
| CN | 112465147 | A | 09 March 2021 | None | | | |
| CN | 112884158 | A | 01 June 2021 | None | | | |
| US | 2021303928 | A1 | 30 September 2021 | US | 11941802 | B2 | 26 March 2024 |
| | | | | EP | 4128151 | A1 | 08 February 2023 |
| | | | | WO | 2021202204 | A1 | 07 October 2021 |
| | | | | JP | 2023519658 | A | 12 May 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310165353